# EUROPÄISCHE PATENTANMELDUNG

(11) **EP 3 812 354 A1**
(43) Veröffentlichungstag der Anmeldung: **28.04.2021**
(21) Anmeldenummer: 20215538.8
(22) Anmeldetag: 12.04.2019
(51) Int. Cl.: C04B 28/02, C04B 28/04, B32B 13/04, E04F 13/14, E04C 2/288, B28B 11/04, B28B 23/02

(54) **VERFAHREN ZUR HERSTELLUNG EINES WÄRMEGEDÄMMTEN BETONFERTIGTEILS**

(30) Priorität: 13.04.2018 DE 102018108789
(62) Teilanmeldung aus: 19718144.9
(71) Anmelder: Interbran Baustoff GmbH, 67550 Worms (DE)
(72) Erfinder: GABRIEL, Andreas, 74259 Widdern (DE); SCHÜMCHEN, H. C. Kurt, 53949 Dahlem (DE)
(74) Vertreter: Von Rohr Patentanwälte Partnerschaft mbB

(57) **Zusammenfassung**

Die vorliegende Erfindung betrifft ein Verfahren zur Herstellung eines wärmegedämmten Betonfertigteils, aufweisend mindestens eine Betonschicht und eine Dämmschicht, wobei die Dämmschicht an der Betonschicht angeordnet ist.

## Beschreibung

Die vorliegende Erfindung betrifft das technische Gebiet der Wärmedämmung, insbesondere der Herstellung und Verwendung von wärmegedämmten Betonfertigteilen.

Insbesondere betrifft die vorliegende Erfindung ein wärmegedämmtes Betonfertigteil sowie dessen Verwendung.

Weiterhin betrifft die vorliegende Erfindung eine Baustofftrockenmischung zur Herstellung einer Dämmmasse, welche zur Wärmedämmung von Betonfertigteilen eingesetzt werden kann, sowie ihre Verwendung und die mit der Baustofftrockenmischung erhältliche Dämmmasse.

Schließlich betrifft die vorliegende Erfindung ein Verfahren zur Herstellung eines wärmegedämmten Betonfertigteils.

Zunehmend werden nicht nur Decken und Kellergeschosse von mehrgeschossigen Häusern sowie von Ein- und Zweifamilienhäusern aus Beton gefertigt, sondern auch Geschoss- und Innenwände.

Die Verwendung von Beton erlaubt die Erstellung sehr schlanker tragfähiger Strukturen, welche eine hohe Tragkraft und Festigkeit aufweisen, was beispielsweise große Fensteröffnungen und eine sehr offene Bauweise ermöglicht. Darüber bereichern Sichtbetonfassaden die Möglichkeit der architektonischen Gestaltung.

Der Einsatz von Beton bietet weiterhin den Vorteil, dass einzelne Teile, wie beispielsweise Wand- und Deckenelemente industriell unter kontrollierten und konstanten Bedingungen vorgefertigt werden können und folglich mit stets gleichbleibender Qualität gefertigt und nahezu wetterunabhängig auf der Baustelle verbaut werden können. Darüber hinaus kann eine stets gleichbleibende und hohe Qualität bei der Ausführung der Betonteile garantiert werden. Da Beton als flüssige Masse eingesetzt wird, welche erhärtet, lassen sich auch außergewöhnliche Formen und individuelle Planungen bzw. Wünsche mittels Beton realisieren, und dies auch im industriellen Maßstab. Aus diesen Gründen ist der Einsatz von Betonfertigteilen bzw. Fertigbetonbauteilen mittlerweile weit verbreitet und nimmt ständig zu.

Durch die Verwendung von Betonfertigteilen kann darüber hinaus die Bauzeit deutlich reduziert werden, wodurch Kosten gespart werden, da vor Ort auf der Baustelle nur wenig vorgefertigte Teile zusammengefügt werden müssen.

Problematisch an der Verwendung von Beton bzw. Betonfertigteilen ist jedoch, dass Beton eine Wärmeleitfähigkeit von ca. 2 W/(mK) aufweist. Dies bedeutet, dass Beton nochmals deutlich bessere Wärmeleitfähigkeiten aufweist als beispielsweise Mauerwerk aus Vollziegeln und Betonteile somit hervorragende Wärmebrücken darstellen, was bei der Gebäudekonstruktion unerwünscht ist.

Weiter verbessert wird die Wärmeleitfähigkeit von Beton noch durch die im Beton in der Regel enthaltene Stahlarmierung.

Die gute Wärmeleitfähigkeit von Beton hat zur Folge, dass Gebäude bzw. Gebäudeteile aus Beton gut wärmegedämmt werden müssen, um einerseits die gesetzlichen Vorgaben, insbesondere der Energieeinsparverordnung (EnEV), zu erfüllen und andererseits die Energiekosten für die Beheizung und Kühlung von Gebäuden im vertretbaren Rahmen zu halten.

Üblicherweise wird eine Wärmedämmung an Gebäuden mittels Wärmedämmverbundsystemen (WDVS) vorgenommen, welche aus einem plattenförmigen Dämmmaterial, einer außenseitig darauf angebrachten Armierungsschicht, bestehend aus einem Armierungsmörtel sowie einem Armierungsgewebe, und einem Oberputz aufgebaut sind. Die Dämmplatten sind üblicherweise auf Basis von Kunststoffen, insbesondere Polystyrol-Hartschäumen (PS), wie beispielsweise Polystyrol-Partikelschaum (EPS), Polystyrol-Extruderschaum (XPS) oder auf Basis von Polyurethanen-Hartschäumen (PUR) ausgebildet. Wärmedämmverbundsysteme auf Grundlage der vorgenannten Kunststoffdämmplatten besitzen unter Idealbedingungen hervorragende Dämmeigenschaften, haben jedoch den Nachteil, dass sie eine Dampfsperre bilden und Feuchtigkeit aus dem Mauerwerk nicht an die Umgebung abgegeben werden kann, was oftmals zur Bildung von Schimmel und Algen führt.

Darüber hinaus steigert die Feuchtigkeit die Wärmeleitfähigkeit des Systems, weshalb der theoretische Wärmedurchgangskoeffizient (U-Wert) gemäß EN ISO 6946 in der Praxis oftmals nicht erreicht wird. Ein weiterer Nachteil derartiger Wärmedämmverbundsysteme (WDVS) ist, dass sie üblicherweise Dicken von 10 bis 20 cm besitzen, um eine ausreichende Wärmedämmung zu erreichen. Dies ist jedoch gerade bei Betonwänden, die eine sehr schlanke Konstruktion mit großen Fenster- und Türöffnungen ermöglichen, nicht gewünscht.

Aus diesem Grund wurden kerngedämmte Betonfertigteile entwickelt, bei welchen eine Dämmschicht zwischen zwei Betonschichten, nämlich einer Außen- und einer Innenschicht, der sogenannten Außen- bzw. Innenschale, vorgesehen ist. Derartige Dämmschichten bestehen üblicherweise aus den gleichen Kunststoffmaterialien, welche auch für Wärmedämmverbundsysteme eingereicht werden, insbesondere aus polystyrolbasierten Materialien, wie beispielsweise Polystyrol-Partikelschaum (EPS), Polystyrol-Extruderschaum (XPS), oder aus Polyurethan (PUR). Die kunststoffbasierten Dämmplatten werden dabei auf eine bereits vorgefertigte Betonschicht, zumeist die Außenschale, des Betonfertigteils aufgebracht, indem die Dämmplatten zurechtgeschnitten und mittels eines Klebstoffs auf der Betonschale befestigt werden. Anschließend wird entweder die zweite Schale gleichfalls an der Dämmschicht befestigt oder es ist eine Armierung vorgesehen, welche die innere und die äußere Betonschale verbindet, wobei zwischen der inneren Betonschale und der Dämmschicht ein Hohlraum bzw. ein Spalt verbleibt, welcher an der Baustelle mit Vergussbeton, dem sogenannten Ortbeton, gefüllt wird. Auf diese Weise ist es möglich, einen fugenlosen Betonkern im Inneren einer Betonfertigwand bzw. -decke zu erhalten.

Mit den vorgenannten doppelwandigen kerngedämmten Betonfertigteilen ist es möglich, in kurzer Zeit und kostensparend Gebäude zu errichten. Problematisch ist jedoch, dass die kunststoffbasierten Dämmstoffe nicht diffusionsoffen sind, sondern Dampfsperren bilden, was die Bildung von Schimmel fördert, insbesondere für den Fall, dass Wärmebrücken vorhanden sind, was trotz großer Vorsicht in Planung und Ausführung des Gebäudebaus kaum zu vermeiden ist.

Darüber hinaus stellt die Verbindung der kunststoffbasierten Dämmmaterialien mit dem mineralischen Beton bei der Entsorgung ein großes Problem dar, da Beton und Kunststoff üblicherweise nicht getrennt werden können und der Bauschutt als Mischabfall bzw. bei Verwendung von bestimmten Polystyrolen auch als Sonderabfall sehr kostenintensiv entsorgt werden muss. Dies treibt die Entsorgungskosten deutlich in die Höhe.

Darüber hinaus ist absehbar, dass zukünftig die gesetzlichen Vorgaben im Hinblick auf die Verwendung von kunststoffbasierten Dämmstoffmaterialien und deren Entsorgung weiter verschärft werden, so dass dies einen gravierenden Nachteil für das Bauen mit Beton bzw. Betonfertigteilen darstellt, welches prinzipiell in vielerlei Hinsicht konventionellen Bautechniken überlegen ist und darüber hinaus neue gestalterische Optionen eröffnet.

Im Stand der Technik ist bislang kein Dämmsystem bekannt, mit welchem sich wärmegedämmte, insbesondere kerngedämmte, Betonfertigelemente herstellen lassen, so dass nicht nur der Einsatz der Betonfertigelemente zu wirtschaftlich sinnvollen Konditionen möglich ist, sondern auch die Entsorgung unkritisch ist.

Der vorliegenden Erfindung liegt somit die Aufgabe zugrunde, die zuvor genannten im Stand der Technik auftretenden Nachteile zu vermeiden, zumindest jedoch abzuschwächen.

Insbesondere ist eine Aufgabe der vorliegenden Erfindung darin zu sehen, wärmegedämmte Betonfertigteile zur Verfügung zu stellen, welche hervorragende Wärmedämmeigenschaften aufweisen, unter Gesichtspunkten des Umwelt- und Gesichtspunktes unbedenklich sind und darüber hinaus auch einfach zu entsorgen sind.

Darüber hinaus ist eine weitere Aufgabe der vorliegenden Erfindung darin zu sehen, ein Verfahren zur Herstellung von gedämmten Betonfertigteilen bereitzustellen, welches einen besonders innigen und dauerhaften Verbund von Beton und Dämmung ermöglicht.

Darüber hinaus ist eine weitere Aufgabe der vorliegenden Erfindung darin zu sehen, einen Dämmstoff bereitzustellen, welcher sich sehr gut mit Beton verbinden lässt, in der Herstellung möglichst kostengünstig verfügbar ist und sich positiv auf das Klima innerhalb eines Gebäudes auswirkt.

Die zuvor geschilderte Aufgabenstellung wird erfindungsgemäß durch ein Betonfertigteil nach Anspruch 1 gelöst; weitere vorteilhafte Weiterbildungen und Ausgestaltungen des erfindungsgemäßen Betonfertigteils sind Gegenstand der diesbezüglichen Unteransprüche.

Weiterer Gegenstand der vorliegenden Erfindung ist die Verwendung des erfindungsgemäßen Betonfertigteils nach Anspruch 41.

Wiederum weiterer Gegenstand der vorliegenden Erfindung ist eine Baustofftrockenmischung nach Anspruch 42; weitere, vorteilhafte Ausgestaltungen und Weiterbildungen dieses Erfindungsaspektes sind Gegenstand der diesbezüglichen Unteransprüche.

Wiederum weiterer Gegenstand der vorliegenden Erfindung ist die Verwendung der erfindungsgemäßen Baustofftrockenmischung nach Anspruch 59; weitere, vorteilhafte Ausgestaltungen dieses Erfindungsaspektes sind Gegenstand des diesbezüglichen Unteranspruchs.

Wiederum weiterer Gegenstand der vorliegenden Erfindung ist eine erfindungsgemäße Dämmmasse nach Anspruch 61.

Schließlich ist wiederum weiterer Gegenstand der vorliegenden Erfindung ein Verfahren zur Herstellung eines Betonfertigteils nach Anspruch 62; weitere, vorteilhafte Ausgestaltungen dieses Erfindungsaspekts sind Gegenstand der diesbezüglichen Unteransprüche.

Im Rahmen der vorliegenden Erfindung gilt, dass alle im Folgenden genannten, Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Es versteht sich von selbst, dass im Folgenden genannte besondere Ausgestaltungen, insbesondere besondere Ausführungsformen oder dergleichen, welche nur im Zusammenhang mit einem Erfindungsaspekt beschrieben sind, auch in Bezug auf die anderen Erfindungsaspekte entsprechend gelten, ohne dass dies einer ausdrücklichen Erwähnung bedarf.

Weiterhin ist bei allen nachstehend genannten relativen bzw. prozentualen, insbesondere gewichtsbezogenen Mengenangaben zu beachten, dass diese im Rahmen der vorliegenden Erfindung vom Fachmann derart auszuwählen sind, dass in der Summe der Inhalts-, Zusatz- bzw. Hilfsstoffe oder dergleichen stets 100 % bzw. 100 Gew.-% resultieren. Dies versteht sich für den Fachmann aber von selbst.

Dies vorausgeschickt, wird nachfolgend der Gegenstand der vorliegenden Erfindung näher erläutert.

Gegenstand der vorliegenden Erfindung - gemäß einem ersten Aspekt der vorliegenden Erfindung - ist somit ein Betonfertigteil, aufweisend mindestens eine Betonschicht und eine Dämmschicht, wobei die Dämmschicht an der Betonschicht angeordnet ist und wobei die Dämmschicht mineralisch basiert, insbesondere zementbasiert, ist.

Denn, wie nunmehr gefunden wurde, lässt sich durch die Verwendung mineralisch basierter, insbesondere zementbasierter, Dämmschichten auf einer Betonschicht auf äußerst einfache Weise ein Betonfertigteil mit hervorragenden Wärmedämmeigenschaften erzeugen.

Durch die Verwendung von mineralisch basierten, insbesondere zementbasierten Dämmschichten, ist darüber hinaus ein sehr inniger und dauerhafter Verbund zwischen Betonschicht und Dämmschicht zu erzielen. Dies gilt insbesondere für den Fall, dass die Dämmschicht ein zementbasiertes Bindemittel enthält, da eine Dämmmasse bzw. ein Mörtel, welcher die Dämmschicht bildet, auf den noch flüssigen Beton der Betonschicht aufgetragen werden kann. Aufgrund der ähnlichen Bindemittelsysteme von Beton- und Dämmschicht bildet sich zwischen der Betonschicht und der Dämmschicht eine sehr innige und stoffschlüssige Verbindung aus, so dass auf weitere Klebstoffe oder Mörtel zur Befestigung der Dämmschicht an der Betonschicht verzichtet werden kann.

Darüber hinaus ist eine mineralisch basierte bzw. zementbasierte Dämmschicht deutlich unempfindlicher gegenüber mechanischen Beschädigungen als beispielsweise die üblicherweise verwendeten kunststoffbasierten Dämmplatten.

Durch die Verwendung einer mineralisch basierten, insbesondere zementbasierten, Dämmschicht wird darüber hinaus gewährleistet, dass die erfindungsgemäßen Betonfertigteile als rein mineralischer Bauschutt entsorgt werden können und nicht etwa als Mischabfall oder sogar Sonderabfall deklariert und aufwendig entsorgt werden müssen. Die Verwendung mineralisch basierter, insbesondere zementbasierter, Dämmschichten verhindert, dass unter Umweltgesichtspunkten oder gesundheitlichen Aspekten bedenkliche Stoffe über die Dämmschicht in Gebäude eingebracht werden.

Das erfindungsgemäße Betonfertigteil ist aufgrund der mineralisch basierten, insbesondere zementbasierten, Dämmschicht diffusionsoffen, wohingegen Standardbetonfertigteile, welche wärmegedämmt sind, aufgrund der verwendeten Kunststoffmaterialien üblicherweise Dampfsperren bilden und folglich bei vorhandenen Wärmebrücken die Bildung von Schimmel fördern.

Das erfindungsgemäße Betonfertigteil kann bei hervorragenden Wärmedämmeigenschaften mit sehr geringer Schichtdicke produziert werden, so dass sehr tragfähige und zugleich hoch wärmedämmende Strukturen, welche eine Vielzahl von Gestaltungsmöglichkeiten für Architekten und Planer bieten, zugänglich sind. Insbesondere ist es möglich, die Betonschicht als Außenschale in Form von Sichtbeton auszuführen, auf welches innenseitig die Wärmedämmung aufgebracht ist.

Insbesondere bei Verwendung von doppelwandigen kerngedämmten Systemen können nicht nur ästhetisch sehr ansprechende Ergebnisse erzielt werden, sondern insbesondere speziell bei Systemen, bei welchen ein Spalt bzw. ein Hohlraum zwischen Dämmung und einer Betoninnenschale vorgesehen ist, kann durch den Einsatz von Ortbeton bzw. Vergussbeton eine Betonwand bzw. Betondecke mit einem fugenlosen Betonkern erhalten werden.

Das erfindungsgemäße Betonfertigteil kann sowohl zur Herstellung von Wänden als auch Decken eingesetzt werden und ermöglicht insbesondere die Bereitstellung von kerngedämmten Betonfertigelementen für Wände und Decken.

Da die mineralisch basierte, insbesondere zementbasierte, Dämmschicht vorzugsweise in Form eines Mörtels, insbesondere einer Dämmmasse, auf die Betonschicht aufgetragen wird, entfällt auch der Verschnitt, welcher durch das Konfektionieren von Kunststoffdämmplatten zwangsläufig entsteht, insbesondere wenn Löcher für Fenster oder Türen oder Durchbrüche in den Fertigteilen ausgespart werden müssen. Das erfindungsgemäße Betonfertigteil lässt somit sehr resourcensparend und kostengünstig produzieren.

Darüber hinaus weist das erfindungsgemäße Betonfertigteil sämtliche Vorteile konventioneller Betonfertigteile auf, nämlich dass es unter reproduzierbaren und vorgegebenen Bedingungen mit stets gleichbleibender Qualität produziert werden kann, wobei Anpassung an individuelle Maße, z. B. Fenster- und Türöffnungen sowie weitere Durchbrüche jeglicher Art möglich sind. Auch weisen die erfindungsgemäßen Betonfertigteile durch die reproduzierbaren Bedingungen eine hohe Maßhaltigkeit auf, d. h. ein unkontrolliertes bzw. ungleichmäßiges Schrumpfen während des Trocknungsprozesses wird vermieden.

Unter einem Betonfertigkeit ist im Rahmen der vorliegenden Erfindung ein vorgefertigter Gegenstand, insbesondere ein Element, aus Beton zu verstehen, welcher grundsätzlich jede beliebige Form aufweisen kann und ein- oder mehrschalig bzw. - schichtig aufgebaut sein kann. Das Betonfertigteil kann weitere Schichten, wie beispielsweise eine Dämmschicht, aber auch Rohrleitungen oder Kabelschächte enthalten.

Unter einer Betonschicht ist im Rahmen der vorliegenden Erfindung ein Teil eines Gegenstands zu verstehen, welcher aus Beton besteht und eine gewisse Dicke aufweist. Die Schicht ist üblicherweise flächig, d.h. mit Hauptausdehnungsrichtungen in zwei Raumrichtungen ausgebildet, wobei sie nicht zwingend nahezu zweidimensional ausgebildet sein muss, sondern kann prinzipiell jegliche Form annehmen. Eine Schicht weist in der betrachteten Raumrichtung in der Regel eine Dicke von weniger als 50 cm auf. Auch muss die Schicht nicht durchgehend sein, sondern kann z. B. unterbrochen auf ein weiteres Substrat oder eine Armierung aufgebracht sein.

Unter einer Dämmschicht ist im Rahmen der vorliegenden Erfindung eine Schicht aus einem Dämmmaterial, insbesondere aus einem ausgehärteten Putzmörtel bzw. einer Dämmmasse zu verstehen, welche eine gewisse Dicke, insbesondere Schichtdicke, aufweist. Auch im Fall der Dämmschicht gilt, dass diese nichts zwangsläufig eine nahezu zweidimensionale Ausdehnung besitzen muss, d. h. lediglich in zwei Raumrichtungen sich vorzugsweise erstreckt, sondern auch unregelmäßige bzw. gebogene Formen annehmen kann.

Im Rahmen der vorliegenden Erfindung ist es üblicherweise vorgesehen, dass die Dämmschicht mittelbar und/oder unmittelbar, vorzugsweise unmittelbar, an der Betonschicht angeordnet ist. In diesem Zusammenhang ist es bevorzugt, wenn die Dämmschicht mittelbar und/oder unmittelbar, vorzugsweise unmittelbar, auf die Betonschicht aufgebracht ist. Unter einer unmittelbaren Anordnung bzw. Aufbringung der Dämmschicht ist zu verstehen, dass die Dämmschicht die Betonschicht unmittelbar kontaktiert, d. h. ohne weitere Zwischenschichten an dieser angeordnet bzw. auf diese aufgebracht ist. Eine mittelbare Anordnung bzw. Aufbringung der Dämmschicht an bzw. auf der Betonschicht bedeutet im Rahmen der vorliegenden Erfindung hingegen, dass Zwischenschichten, wie beispielsweise Armierungsschichten oder Diffusionssperren, zwischen der Betonschicht und der Dämmschicht angeordnet sind.

Im Rahmen der vorliegenden Erfindung wird es jedoch bevorzugt, wenn die Dämmschicht unmittelbar auf die Betonschicht, insbesondere eine erste Betonschicht, aufgebracht ist.

Darüber hinaus ist im Rahmen der vorliegenden Erfindung bevorzugt, wenn die Betonschicht, an welcher die Dämmschicht angeordnet ist bzw. auf welche Dämmschicht aufgebracht ist, eine Außenschicht ist, d. h. die Außenschale des Betonfertigteils bildet, insbesondere bei doppelwandiger Ausführung des Betonfertigteils.

Im Rahmen der vorliegenden Erfindung wird es weiterhin bevorzugt, wenn die Dämmschicht ohne Verwendung von Klebstoffen und/oder Mörteln an der Betonschicht angeordnet ist. Im Rahmen der vorliegenden Erfindung kann insbesondere durch die Verwendung von mineralischen Dämmschichten bzw. zementbasierten Dämmschichten, welche ein der Betonschicht sehr ähnliches Bindemittelsystem aufweisen, ein inniger und vorzugsweise stoffschlüssiger Verbund zwischen Betonschicht und Dämmschicht ohne weitere Maßnahmen, welche die Haftung erhöhen, erzielt werden. Im Rahmen der vorliegenden Erfindung wird es bevorzugt, wenn die Dämmschicht als Dämmmasse, insbesondere in Form eines Mörtels, auf die Betonschicht aufgebracht wird. Auf diese Weise wird eine vollflächige und eine besonders gute Haftung zwischen Betonschicht und Dämmschicht erzielt.

Im Rahmen der vorliegenden Erfindung ist es weiterhin üblicherweise vorgesehen, dass die Dämmschicht mindestens eine Fläche der Betonschicht insbesondere zumindest bereichsweise bedeckt. In diesem Zusammenhang wird es bevorzugt, wenn die Dämmschicht mindestens eines Fläche der Betonschicht zum überwiegenden Teil bedeckt, bevorzugt mindestens eine Fläche der Betonschicht nahezu vollflächig bedeckt. Im Rahmen der vorliegenden Erfindung wird es somit bevorzugt, wenn die Dämmschicht zumindest eine Fläche bzw. Seite der Betonschicht nahezu vollflächig bedeckt; frei bleiben üblicherweise lediglich Aussparungen für Anschlüsse an weitere Bauteile oder für Leitungen oder Fugen etc.

Im Rahmen der vorliegenden Erfindung wird es bevorzugt, wenn die Dämmschicht überwiegend aus anorganischen Materialien besteht, vorzugsweise nahezu vollständig oder vollständig aus anorganischen Materialien besteht.

Besonders gute Ergebnisse werden im Rahmen der vorliegenden Erfindung erhalten, wenn die Dämmschicht zu mindestens 90 Gew.-%, insbesondere 95 Gew.-%, vorzugsweise 97 Gew.-%, bevorzugt 98 Gew.-%, bezogen auf die Dämmschicht, aus anorganischen Materialien besteht.

Im Rahmen der vorliegenden Erfindung wird es somit bevorzugt, wenn die mineralisch basierte bzw. zementbasierte Dämmschicht möglichst frei von organischen Stoffen ist. In diesem Fall ist das Betonfertigteil mit der Brennbarkeit A1 oder A2 gemäß DIN 4102 zu klassifizieren, was die Notwendigkeit weiterer Brandschutzmaßnahmen deutlich verringert. Darüber hinaus ist durch den geringen Anteil an organischen Materialien auch eine Entsorgung des erfindungsgemäßen Betonfertigteils nach Ablauf der Verwendungsdauer als rein mineralischer Bauschutt möglich.

Im Rahmen der vorliegenden Erfindung enthalten die Betonschicht bzw. die Dämmschicht organische Materialien vorzugsweise nur in Form von Additiven, insbesondere beispielsweise als Hydrophobierungsmittel, Verlaufmittel, Porenbildner etc.

Im Rahmen der vorliegenden Erfindung kann es gleichfalls vorgesehen sein, dass die Dämmschicht zu 90 bis 100 Gew.-%, insbesondere 95 bis 100 Gew.-%, vorzugsweise 97 bis 100 Gew.-%, bevorzugt 98 bis 100 Gew.-%, bezogen auf die Dämmschicht, aus anorganischen Materialien besteht.

Im Rahmen der vorliegenden Erfindung ist es üblicherweise vorgesehen, dass die Dämmschicht anorganische Füllstoffe, insbesondere mineralische Füllstoffe, enthält. In diesem Zusammenhang ist es üblicherweise vorgesehen, dass die Dämmschicht anorganische Füllstoffe, insbesondere mineralische Füllstoffe, in Mengen von mindestens 20 Gew.-%, insbesondere 40 Gew.-%, vorzugsweise 50 Gew.-%, bevorzugt 60 Gew.-%, bezogen auf die Dämmschicht, aufweist.

Gleichermaßen kann es im Rahmen der vorliegenden Erfindung vorgesehen sein, dass die Dämmschicht anorganische Füllstoffe, insbesondere mineralische Füllstoffe, in Mengen von 20 bis 80 Gew.-%, insbesondere 40 bis 75 Gew.-%, vorzugsweise 50 bis 70 Gew.-%, bevorzugt 60 bis 70 Gew.-%, bezogen auf die Dämmschicht, aufweist. Bevorzugt wird es erfindungsgemäß, wenn zumindest ein Teil der Füllstoffe in Form von Leichtzuschlägen vorliegt.

Die im Rahmen der vorliegenden Erfindung eingesetzten bzw. verwendeten Leichtzuschläge sind dem Fachmann als solche bekannt. Unter dem Begriff "Zuschlag" sind im Rahmen der vorliegenden Erfindung insbesondere Betonzuschläge nach DIN 1045 zu verstehen. Bei den Zuschlägen handelt es sich um Füllstoffe mit Korngrößen, die für die jeweilige Bindemittelherstellung geeignet sind. Für weitergehende Informationen zum Begriff "Zuschlag" kann insbesondere verwiesen werden auf RÖMPP Chemielexikon, 10. Auflage, Georg-Thieme-Verlag, Stuttgart/New York, Band 1, 1998, Seiten 419 und 420, Stichwort: "Betonzuschlag" sowie die dort referierte Literatur, deren jeweiliger Inhalt hiermit durch Bezugnahme vollumfänglich eingeschlossen ist. Unter einem Leichtzuschlag ist dabei im Rahmen der vorliegenden Erfindung ein Zuschlag mit einer Kornrohdichte von höchstens 2,0 kg/dm³ zu verstehen. Durch die Verwendung von Leichtzuschlägen kann insbesondere das Gewicht des Betons reduziert werden und gleichzeitig werden die Wärmedämmeigenschaften aufgrund der porösen Struktur der meisten Leichtzuschläge deutlich verbessert. Besonders gute Ergebnisse werden erhalten, wenn sämtliche verwendeten anorganischen Füllstoffe eine Kornrohdichte von höchstens 2,0 kg/dm³ aufweisen. Dies gilt auch für anorganische Füllstoffe, welche keine üblichen Betonzuschläge sind.

Im Rahmen der vorliegenden Erfindung hat es sich bewährt, wenn der anorganische Füllstoff, insbesondere mineralische Füllstoff, ausgewählt aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand, Silica-Aerogelen, Silica-Hybridaerogelen und deren Mischungen. Besonders gute Ergebnisse werden in diesem Zusammenhang erzielt, wenn der anorganische Füllstoff, insbesondere mineralische Füllstoff ausgewählt ist aus der Gruppe von Perlit, insbesondere geblähtem Perlit, Vermiculit, insbesondere geblähtem Vermiculit, Aerogelen, insbesondere Silica-Aerogelen und/oder Silica-Hybridaerogelen, und deren Mischungen, bevorzugt deren Mischungen. Bei den vorgenannten anorganischen Füllstoffen bzw. mineralischen Füllstoffen handelt es sich insbesondere um hochporöse anorgansiche Materialien, welche gute Wärmedämmeigenschaften aufweisen und nicht brennbar sind.

Bevorzugt werden im Rahmen der vorliegenden Erfindung Leichtzuschläge in Kombination mit weiteren anorganischen, insbesondere mineralischen, Füllstoffen eingesetzt, welche vorzugsweise eine Kornrohdichte von höchstens 2,0 kg/dm³ aufweisen.

Besonders gute Ergebnisse werden im Rahmen der vorliegenden Erfindung erhalten, wenn die Dämmschicht einen Leichtzuschlag ausgewählt aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand und deren Mischungen, in Kombination mit einem anorganischen Füllstoff in Form eines Aerogels, insbesondere eines Silica-Aerogels und/oder Silica-Hybridaerogels, aufweist. Insbesondere enthält die Dämmschicht die Kombination von Leichtzuschlag und weitere anorganische Füllstoffe in Form eines Aerogels in den zuvor genannten Mengen.

Es hat sich in diesem Zusammenhang besonders bewährt, wenn die Dämmschicht einen Leichtzuschlag ausgewählt aus der Guppe von Perlit, insbesondere geblähtem Perlit, Vermiculit, insbesondere geblähtem Vermiculit, und deren Mischungen, in Kombination mit einem anorganischen Füllstoff in Form eines Aerogels, insbesondere eines Silica-Aerogels und/oder eines Silica-Hybridaerogels, aufweist. Insbesondere durch die Kombination von Leichtzuschlag und Aerogel lassen sich mineralisch basierte Dämmschichten mit besonders guten Wärmedämmeigenschaften erzielen.

Silica-Aerogele sind hochporöse Festkörper, die zu mehr als 90 Vol.-% aus Poren bestehen und üblicherweise aus Siliziumdioxid bzw. kondensierter Kieselsäure aufgebaut sind. Die üblicherweise hydrophilen Silica-Aerogele können dabei hydrophobiert sein, wobei eine Hydrophobierung insbesondere durch Behandlung mit Hydrophobierungsmitteln bzw. durch die Verwendung von Organosilanen oder Siloxanen bei der Synthese der Silica-Aerogele erzielt wird.

Unter einem Silica-Hybridaerogel ist im Rahmen der vorliegenden Erfindung ein Silica-Aerogel zu verstehen, welches 1 bis 20 Gew.-%, insbesondere 5 bis 15 Gew.-%, bezogen auf das Silica-Hybridaerogel, mindestens eines Polysaccharides enthält. Das Polysaccharid ist üblicherweise ausgewählt aus Stärke, Gummi arabicum, Xanthan, Pektin, Agarose, Celluloseethern, insbesondere Pektin und/oder Xanthan.

Die Polysaccharide werden üblicherweise bereits bei der Herstellung des Silica-Hybridaerogels zugegeben und bilden eine äußerst flexible, jedoch zugleich stabile Matrix aus, welche die einzelnen Silica-Aerogelpartikel flexibel miteinander verbindet und vor zu hohen mechanischen Belastungen schützt.

Silica-Hybridaerogele weisen im Vergleich zu üblichen Silica-Aerogelen deutlich verbesserte mechanische Eigenschaften bei nur geringfügig verschlechterten Wärmedämmeigenschaften auf.

Ein geeignetes Verfahren zur Herstellung von Silica-Hybridaerogelen wird beispielsweise beschrieben in S. Zhao, W. J. Malfait, A. Demilecamps, Y. Zhang, S. Brunner, L. Huber, P. Tingaut, A. Rigacci, T. Budtova und M. M. Koebel, "Strong, Thermally Superinsulating Biopolymer-Silica Aerogel Hybrids by Cogelation of Silicic Acid with Pectin", Angewandte Chemie, 127, 48, 2015, Seiten 14490 bis 14494.

Im Rahmen der vorliegenden Erfindung wird es weiterhin bevorzugt, wenn die Dämmschicht ein gewichtsbezogenes Verhältnis von Leichtzuschlag zu Aerogel im Bereich von 15 : 1 bis 1 : 10, insbesondere 10 : 1 bis 1 : 8, vorzugsweise 5 : 1 bis 1 : 5, bevorzugt 2 : 1 bis 1 : 2, besonders bevorzugt 2 : 1 bis 1 : 1, aufweist. Die Verwendung von Leichtzuschlägen und Aerogelen in den vorgenannten gewichtsbezogenen Verhältnissen ermöglicht zum einen die Herstellung von Dämmschichten mit hervorragenden Wärmedämmeigenschaften und verleiht zum anderen der Dämmschicht die notwendige mechanische Widerstandsfähigkeit.

Im Rahmen der vorliegenden Erfindung kann es gleichfalls vorgesehen sein, dass die Dämmschicht Fasern, insbesondere anorganische, vorzugsweise mineralische, Fasern, enthält. Durch die Verwendung von Fasern kann die Festigkeit und mechanische Widerstandsfähigkeit der Dämmschicht nochmals erhöht werden. Die Verwendung von anorganischen Fasern, insbesondere mineralischen anorganischen Fasern ist dabei bevorzugt, um die Brennbarkeit der Betonfertigteile zu verschlechtern und eine problemlose Entsorgung zu ermöglichen.

Wenn die Dämmschicht Fasern aufweist, so hat es sich bewährt, wenn die Fasern ausgewählt sind aus Calciumsilikatfasern, Glasfasern, Wollastonitfasern, Kohlenstofffasern, Kohlenstoffnanoröhren und deren Mischungen. Besonders bevorzugt wird es im Rahmen der vorliegenden Erfindung, wenn die Fasern ausgewählt sind aus Calciumsilikatfasern, Glasfasern, Wollastonitfasern und deren Mischungen.

Besonders gute Ergebnisse werden erhalten, wenn die Fasern Calciumsilikatfasern sind.

Was nun die Mengen anbelangt, in welchen die Zusammensetzungen die Fasern enthalten kann, so kann diese naturgemäß in weiten Bereichen variieren. Es hat sich jedoch bewährt, wenn die Zusammensetzung die Fasern in Mengen von 0,1 bis 20 Gew.-%, insbesondere 0,2 bis 15 Gew.-%, insbesondere 0,5 bis 12 Gew.-%, bevorzugt 1 bis 10 Gew.-%, bezogen auf die Zusammensetzung, aufweist. Faseranteile in vorgenannten Bereichen erhöhen zum einen die mechanische Stabilität der Dämmschicht und ermöglichen eine Reduzierung des Bindemittels, wodurch eine Reduzierung der Wärmeleitfähigkeit erzielt werden kann, zum anderen wird die Widerstandsfähigkeit gegenüber mechanischer Belastungen, beispielsweise beim Transport oder Verbau der Betonfertigteile, erhöht.

Gemäß einer bevorzugten Ausführungsform der vorliegenden Erfindung weist die Dämmschicht ein zementbasiertes Bindemittel auf. Wie zuvor bereits ausgeführt, kann die Verwendung zementbasierter Bindemittel eine besonders gute Anbindung an die Betonschicht, insbesondere an die Außenschale, eines Betonfertigteils erzielt werden. Gemäß einer bevorzugten Ausführungsform der vorliegenden Erfindung weist die Dämmschicht Zement als Bindemittel auf, insbesondere Portlandzement, vorzugsweise Weißzement, bevorzugt Schnellzement, gegebenenfalls in Kombination mit Additiven. Besonders gute Ergebnisse werden im Rahmen der vorliegenden Erfindung erhalten, wenn das Bindemittel der Dämmschicht Zement, insbesondere Portlandzement, vorzugsweise Weißzement, bevorzugt, Schnellzement, in Kombination mit Kalk, insbesondere hydraulischen Kalk, ist und gegebenenfalls Additive enthält.

Die erfindungsgemäßen Betonfertigteile besitzen besonders gute wärmedämmende Eigenschaften, was insbesondere auf die Dämmschicht zurückzuführen ist. Üblicherweise weist die Dämmschicht eine Wärmeleitfähigkeit im Bereich von 0,025 bis 0,050 W/(mK), insbesondere 0,030 bis 0,045 W/(mK), vorzugsweise 0,035 bis 0,042 W/(mK), auf. Obwohl die Dämmschicht mineralisch basiert und vorzugsweise zementbasiert ist, weist sie aufgrund des hohen Füllstoffanteils und des vorzugsweise verwendeten Aerogels sehr geringe Wärmeleitfähigkeiten auf.

Gleichermaßen ist es im Rahmen der vorliegenden Erfindung üblicherweise vorgesehen, dass die Dämmschicht eine Wasserdampfdiffusionswiderstandszahl µ, bestimmt nach DIN EN ISO 12542, im Bereich von 2 bis 9, insbesondere 3 bis 7, vorzugsweise 4 bis 6, aufweist. Das erfindungsgemäße Betonfertigteil ist somit diffusionsoffen gegenüber Wasserdampf, d.h. Wasser, welches in das Betonfertigteil gelangt, kann durch die Dämmschicht hindurch diffundieren und nach Passage der Betonschicht schlussendlich an die Umgebung abgegeben werden.

Wie gleichermaßen zuvor bereits ausgeführt, ist die Dämmschicht üblicherweise mineralisch basiert bzw. zementbasiert. Im Allgemeinen weist die Dämmschicht eine Trockenrohdichte im Bereich von 125 bis 250 kg/m³, insbesondere 140 bis 225 kg/m³, vorzugsweise 150 bis 200 kg/m³, auf. Die erfindungsgemäß verwendete Dämmschicht ist somit trotz der rein oder nahezu rein anorganischen Bestandteile relativ leicht, d. h. sie weist nur eine geringe Dichte auf.

Im Rahmen der vorliegenden Erfindung ist es üblicherweise vorgesehen, dass die Dämmschicht die Brennbarkeit A1 oder A2 gemäß DIN 4102 aufweist.

Gemäß einer bevorzugten Ausführungsform der vorliegenden Erfindung ist es vorgesehen, dass das Betonfertigteil ein kerngedämmtes Betonfertigteil ist. Besonders gute Ergebnisse werden im Rahmen der vorliegenden Erfindung somit erzielt, wenn das erfindungsgemäße Betonfertigteil zwei Betonschichten aufweist, zwischen denen eine Dämmschicht angeordnet ist. Die eine Betonschicht wird dabei üblicherweise als Außenschale bezeichnet und kann beispielsweise aus Sichtbeton bestehen, während die andere Betonschicht als Innenschale bezeichnet wird und üblicherweise im Einbauzustand an der Innenseite einer Gebäudehülle angeordnet ist.

Gemäß einer bevorzugten Ausführungsform der vorliegenden Erfindung ist es vorgesehen, dass das Betonfertigteil einen mehrschichtigen Aufbau, aufweisend
(I) eine erste Betonschicht,
(II) eine zweite Betonschicht und
(III) eine Dämmschicht, welche zwischen der ersten Betonschicht und der zweiten Betonschicht angeordnet ist,
besitzt,
wobei die Dämmschicht mineralisch basiert, insbesondere zementbasiert ist.

Gemäß dieser Ausführungsform kann es vorgesehen sein, dass die erste Betonschicht und die zweite Betonschicht insbesondere zumindest bereichsweise parallel angeordnet sind. Mit dieser speziellen bevorzugten Ausführungsform der vorliegenden Erfindung, welche Doppelschichtelemente, insbesondere Doppelwandelemente, darstellen, lassen sich insbesondere kerngedämmte Wand- und Deckenelemente herstellen.

Gleichfalls ist üblicherweise vorgesehen, dass die Dämmschicht mittelbar und/oder unmittelbar an der ersten Betonschicht und/oder der zweiten Betonschicht angeordnet ist.

In diesem Zusammenhang wird es bevorzugt, wenn die Dämmschicht unmittelbar an der ersten Betonschicht angeordnet ist. Die erste Betonschicht bildet dann bei Wandelementen vorzugsweise die Außenschale und die zweite Betonschicht die Innenschale.

Gleichermaßen kann es im Rahmen der vorliegenden Erfindung vorgesehen sein, dass die Dämmschicht mittelbar und/oder unmittelbar, vorzugsweise unmittelbar, an der zweiten Betonschicht angeordnet ist. Auf diese Weise ergibt sich ein massives doppelschaliges kerngedämmtes Wand- oder Deckenelement, welches vor Ort auf der Baustelle verbaut und nur mit weiteren Elementen zusammengefügt werden muss.

Gemäß einer bevorzugten Ausführungsform der vorliegenden Erfindung ist jedoch vorgesehen, dass die Dämmschicht und die zweite Betonschicht beabstandet sind.

Vorzugsweise ist im Rahmen der vorliegenden Erfindung somit vorgesehen, dass zwischen der Dämmschicht und der zweiten Betonschicht ein Abstand, vorgesehen ist, so dass zwischen Dämmschicht und zweiter Betonschicht ein Spalt bzw. Hohlraum entsteht, welcher vor Ort auf der Baustelle mit Beton, dem sogenannten Verguss- oder Ortbeton, gefüllt wird, so dass beispielsweise bei Wänden und Decken fugenfreie Betonkerne erhalten werden können. Vorzugsweise enthält der Hohlraum bzw. Spalt zwischen der ersten Betonschicht und der Dämmschicht noch eine Bewehrung, welche insbesondere dem Verguss- bzw. Ortbeton die notwendige Festigkeit und Flexibilität verleiht.

Wenn die Dämmschicht und die zweite Betonschicht beabstandet sind, so hat es sich bewährt, wenn die Dämmschicht und die zweite Betonschicht einen Abstand von 6 bis 30 cm, insbesondere 7 bis 20 cm, vorzugsweise 8 bis 15 cm, bevorzugt 9 bis 12 cm, aufweisen.

Im Rahmen der vorliegenden Erfindung ist üblicherweise vorgesehen, dass das Betonfertigteil eine Bewehrung aufweist. Allgemein gilt, dass die einzelnen Betonschichten Bewehrungen aufweisen können, um die Festigkeit der jeweiligen Schichten zu erhöhen. Gemäß bevorzugter Ausführungsformen der vorliegenden Erfindung ist es jedoch vorgesehen, dass die Bewehrungen mehrere Schichten des Betonfertigteils durchdringen und diese verbinden, wodurch die Gesamtstabilität des Betonfertigteils nochmals deutlich erhöht wird.

Im Rahmen der vorliegenden Erfindung ist es vorteilhafterweise vorgesehen, dass das Betonfertigteil eine Bewehrung, insbesondere eine erste Bewehrung aus einem Material mit geringer Wärmeleitfähigkeit, insbesondere mit einer Wärmeleitfähigkeit von weniger als 5 W/(mK), vorzugsweise weniger als 2 W/(mK), bevorzugt weniger als 1 W/(mK), aufweist.

Durch die Verwendung von Bewehrungen mit geringer Wärmeleitfähigkeit können beispielsweise eine erste Betonschicht, welche eine Außenschale des Betonfertigteils bildet, und eine Dämmschicht verbunden werden, ohne dass Wärmebrücken in dem Betonfertigteil entstehen. Bei Verwendung von Stahlbewehrungen, welche aus einer Außenschale in die Dämmschicht oder durch die Dämmschicht hindurch reichen, entstehen erhebliche Wärmebrücken und die Wärmedämmeigenschaften des Betonfertigteils sind insgesamt deutlich herabgesetzt.

Im Rahmen der vorliegenden Erfindung besonders gute Ergebnisse erhalten, wenn das Material der Bewehrung, insbesondere das Material der ersten Bewehrung, aus einem Material mit geringer Wärmeleitfähigkeit ausgewählt ist aus Kunststoffen, insbesondere aus faserverstärkten Kunststoffen, vorzugsweise aus glasfaser- und/oder karbonfaserverstärkten Kunststoffen.

Durch die Verwendung von faserverstärkten Kunststoffen ist es möglich, Bewehrungen bereitzustellen, welche einerseits nur eine geringe Wärmeleitfähigkeit aufweisen, andererseits jedoch mechanisch belastbar genug sind, um dem Betonfertigteil die notwendige Stabilität zu verleihen. Derartige Bewehrungen aus Materialien mit geringer Leitfähigkeit, insbesondere aus Kunststoffen, werden nur in äußerst geringem Maße eingesetzt, um dem Betonfertigteil die notwendige Stabilität zu verleihen, insbesondere um zu gewährleisten, dass ein Betonfertigteil mit einer Außenschale und einer daran angebrachten Dämmschicht und einer Innenschale, welche von der Dämmschicht beabstandet ist, als ein Betonfertigteil verarbeitet werden kann. Diese Bewehrung verbindet dann die Außenschale, d. h. die erste Betonschicht, mit der Innenschale, d. h. der zweiten Betonschicht, und durchdringt dabei die Dämmschicht, wobei gleichfalls der Hohlraum bzw. Spalt zwischen Dämmschicht und Innenschale überbückt wird. Neben diesen Bewehrungen aus Materialien mit geringer Wärmeleitfähigkeit kann es vorgesehen sein und ist vorteilhafterweise vorgesehen, dass die Betonschichten oder zumindest eine der Betonschichten eine Stahlarmierung aufweist, welche jedoch die Dämmschicht nicht durchdringt.

Gemäß einer bevorzugten Ausführungsform ist es vorgesehen, dass die Bewehrung, insbesondere die erste Bewehrung, die erste Betonschicht und die zweite Betonschicht verbindet. Gemäß dieser Ausführungsform ist vorteilhafterweise vorgesehen, dass die Bewehrung, insbesondere die erste Bewehrung die Dämmschicht durchdringt.

Im Rahmen der vorliegenden Erfindung ist es gleichermaßen vorteilhafterweise vorgesehen, dass das Betonfertigteil eine Bewehrung, insbesondere eine zweite Bewehrung, aus einem Metall, insbesondere einem eisenhaltigen Metall, vorzugsweise Stahl, aufweist. Durch die Verwendung von Stahlbewehrungen können den Betonfertigteilen verbesserte mechanische Eigenschaften verliehen werden. Insbesondere ist ein deutlich schlankerer Aufbau des Betonfertigteils möglich.

In diesem Zusammenhang wird es bevorzugt, wenn die Bewehrung, insbesondere die zweite Bewehrung, in der zweiten Betonschicht angeordnet ist und gegebenenfalls in den Abstand zwischen der zweiten Betonschicht und der Dämmschicht reicht. Wie zuvor ausgeführt, ist es bei der Verwendung von Metallbewehrungen vorteilhaft, dass diese nicht bis in die Dämmschicht ragen, insbesondere die Dämmschicht nicht durchdringen, da andernfalls Wärmebrücken entstehen würden bzw. bei einer Vielzahl von Durchdringungen die Dämmeigenschaften des Betonfertigteils insgesamt deutlich herabgesetzt sind. Vorzugsweise ist zumindest eine Metallbewehrung in der zweiten Betonschicht verankert und ragt bis in einen Spalt bzw. Hohlraum zwischen der zweiten Betonschicht und der Dämmschicht. Wenn dieser Spalt bzw. Hohlraum dann auf der Baustelle mit Verguss- bzw. Ortbeton befüllt wird, ist es möglich, einen fugenlosen Stahlbetonkern einer Gebäudewand oder -decke zu erhalten.

Gemäß einer bevorzugten Ausführungsform der vorliegenden Erfindung ist es daher vorgesehen, dass die Bewehrung, insbesondere die zweite Bewehrung, in der zweiten Betonschicht und dem Hohlraum zwischen der zweiten Betonschicht und der Dämmschicht angeordnet ist.

Was nun die Brennbarkeit des Betonfertigteils anbelangt, so weist das Betonfertigteil üblicherweise die Brennbarkeit A1 oder A2 gemäß DIN 4102 auf. Das erfindungsgemäße Betonfertigteil ist somit rein mineralisch basiert bzw. fast ausschließlich mineralisch basiert, so dass aufwendige Brandschutzmaßnahmen unterbleiben können.

Was nun die Dicke der Dämmschicht anbelangt, so kann diese in weiten Bereichen in Abhängigkeit von den jeweiligen Anforderungen variieren. Üblicherweise weist die Dämmschicht jedoch eine Schichtdicke von 2 bis 30 cm, insbesondere 3 bis 25 cm, vorzugsweise 5 bis 20 cm, bevorzugt 8 bis 15 cm, auf. Mit den vorgenannten Dämmschichtdicken können hervorragende Wärmedämmungen bis hin zu einem Passivhausstandard erreicht werden.

Im Rahmen der vorliegenden Erfindung kann es darüber hinaus vorgesehen sein, dass die erste Betonschicht eine Schichtdicke von 1,5 bis 15 cm, insbesondere 2 bis 12 cm, vorzugsweise 3 bis 10 cm, bevorzugt 4 bis 8 cm, aufweist. Die erste Betonschicht wird üblicherweise als Außenschale des Betonfertigteils eingesetzt und ist beispielsweise aus Sichtbeton hergestellt.

Gleichermaßen ist im Rahmen der vorliegenden Erfindung üblicherweise vorgesehen, dass die zweite Betonschicht eine Schichtdicke von 1,5 bis 15 cm, insbesondere 2 bis 12 cm, vorzugsweise 3 bis 10 cm, bevorzugt 4 bis 8 cm, aufweist.

Gemäß einer bevorzugten Ausführungsform der vorliegenden Erfindung ist es vorgesehen, dass die Oberfläche der Dämmschicht, insbesondere die Oberfläche der Dämmschicht in Kantenbereichen, einer Oberflächenbehandlung, insbesondere eine Behandlung zur Festigung der Oberfläche unterzogen wurde.

Um die Oberfläche, insbesondere die Kantenbereiche, der Dämmschicht vor mechanischer Beschädigung zu schützen und widerstandsfähiger zu machen, ist es möglich, dass die Oberfläche der Dämmmasse, insbesondere in Kantenbereichen, mit einem Oberflächenbehandlungsmittel behandelt wird. Bei dem Oberflächenbehandlungsmittel handelt es sich vorzugsweise um eine wässrige Dispersion, welche Wasserglas und Fasern, insbesondere mineralische Fasern, aufweist.

Gemäß einer bevorzugten Ausführungsform der vorliegenden Erfindung weist das Oberflächenmodifizierungsmittel 5 bis 50 Gew.-%, insbesondere 8 bis 40 Gew.-%, insbesondere 10 bis 35 Gew.-% Wasserglas, insbesondere Natrium- und/oder Kaliumwasserglas, bezogen auf das Oberflächenbehandlungsmittel, auf.

Vorteilhafterweise weist das Oberflächenbehandlungsmittel weiterhin 0,5 bis 10 Gew.-%, insbesondere 0,5 bis 8 Gew.-%, vorzugsweise 1 bis 5 Gew.-% mineralische Fasern, insbesondere Wollastonitfasern und/oder Calciumsilikatfasern, bezogen auf das Oberflächenbehandlungsmittel, auf.

Gleichermaßen kann es vorgesehen, dass das Oberflächenbehandlungsmittel 0,01 bis 5 Gew.-%, insbesondere 0,1 bis 3 Gew.-%, vorzugsweise 0,2 bis 1 Gew.-%, eines Hydrophobierungsmittels, bezogen auf das Oberflächenbehandlungsmittel, aufweist. Üblicherweise ist das Hydrophobierungsmittel ausgewählt aus Silanen, Siloxanen, Silikonaten sowie deren Mischungen.

Das Oberflächenbehandlungsmittel wird - wie zuvor ausgeführt - vorzugsweise in Form einer wässrigen Dispersion eingesetzt, d. h. das Oberflächenbehandlungsmittel enthält Wasser als Dispersionsmittel.

Das Oberflächenbehandlungsmittel kann auf jede geeignete Art auf die Dämmschicht, insbesondere die Kanten der Dämmschicht aufgebracht werden. Üblicherweise wird das Oberflächenbehandlungsmittel jedoch durch Sprühen, Streichen, Rollen oder Rakeln auf die Oberfläche der Dämmschicht aufgebracht, vorzugsweise durch Sprühen bzw. Spritzen. Nach Behandlung mit dem Oberflächenbehandlungsmittel wird die Oberfläche der Dämmschicht vorzugsweise bei Raumtemperatur oder einer Klimakammer im Temperaturbereich von 40 bis 60 °C gelagert, wodurch eine Aushärtung des Oberflächenbehandlungsmittels stattfindet.

Im Rahmen der vorliegenden Erfindung ist es vorzugsweise vorgesehen, dass das Betonfertigteil ein Wandelement und/oder ein Deckenelement ist. Vorzugsweise handelt es sich um ein Doppelschichtelement, d. h. um ein kerngedämmtes Betonfertigteil mit einer Innen- und einer Außenschale aus Beton, welches zur Herstellung von Decken und Wänden in Gebäuden eingesetzt werden kann.

Es zeigen die Figurendarstellungen gemäß
- Fig. 1: eine Schnittdarstellung eines erfindungsgemäßen Betonfertigteils,
- Fig. 2: einen Schnitt durch ein erfindungsgemäßes Fertigteil, bei welchem Dämmschicht und zweite Betonschicht beanstandet sind,
- Fig. 3: eine perspektivische Darstellung des in Fig. 2 dargestellten erfindungsgemäßen Betonfertigteils und

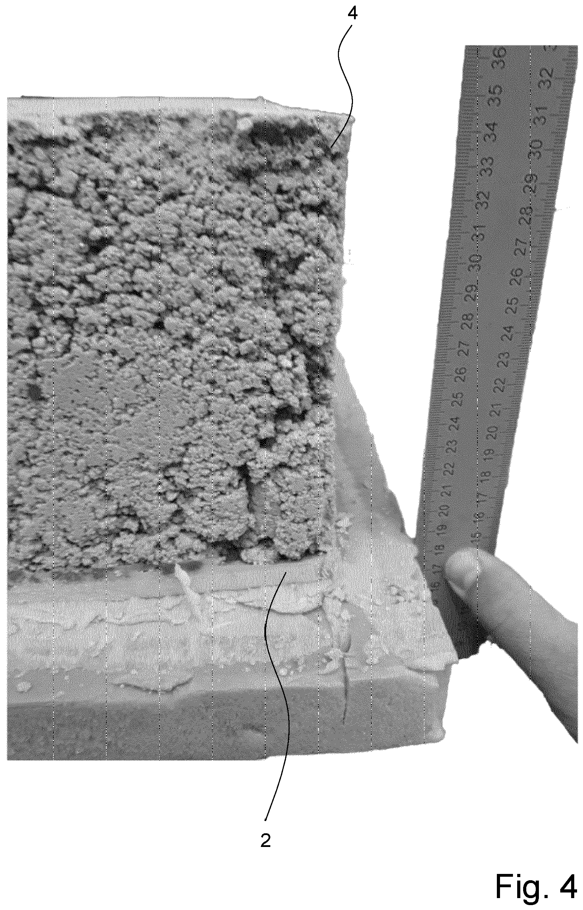

- Fig. 4: ein erfindungsgemäßes zweischichtiges Betonfertigteil.

Weiterer Gegenstand der vorliegenden Erfindung - gemäß einem zweiten Aspekt der vorliegenden Erfindung - ist die Verwendung eines Betonfertigteils wie zuvor beschrieben zur Erstellung von Bauwerken, insbesondere von Häusern.

Für weitere Einzelheiten zu der erfindungsgemäßen Verwendung eines Betonfertigteils kann auf die obigen Ausführungen zu dem erfindungsgemäßen Betonfertigteil verwiesen werden, welche in Bezug auf die Verwendung des Betonfertigteils entsprechend gelten.

Wiederum weiterer Gegenstand der vorliegenden Erfindung - gemäß einem **d r i t t e n** Aspekt der vorliegenden Erfindung - ist eine Baustofftrockenmischung zur Erzeugung einer Dämmmasse zur Herstellung einer Dämmschicht, wobei die Baustofftrockenmischung
(A) ein zementbasiertes Bindemittel in Mengen von 5 bis 50 Gew.-%, bezogen auf die Baustofftrockenmischung,
(B) ein Aerogel in Mengen von 3 bis 50 Gew.-%, bezogen auf die Baustofftrockenmischung, und
(C) mindestens einen Leichtzuschlag in Mengen von 5 bis 60 Gew.-%, bezogen auf die Baustofftrockenmischung,
aufweist.

Die erfindungsgemäße Baustofftrockenmischung eignet sich in hervorragender Weise zur Herstellung der zuvor beschriebenen Dämmschicht eines erfindungsgemäßen Betonfertigteils.

Mit der erfindungsgemäßen Baustofftrockenmischung können insbesondere zementbasierte Dämmmassen hergestellt werden, welche mit Beton einen besonders innigen und dauerhaften Verbund eingehen. Bei der erfindungsgemäßen Baustofftrockenmischung und der aus dieser erhältlichen Dämmmasse bzw. der aus dieser erhältlichen Mörtel handelt es sich lediglich um eine bevorzugte Baustofftrockenmischung bzw. eine bevorzugte Dämmmasse, welche im Rahmen der vorliegenden Erfindung zur Herstellung des erfindungsgemäßen Betonfertigteils verwendet werden kann; andere zementbasierte Dämmmassen können gleichfalls mit großem Erfolg eingesetzt werden, wobei bislang die besten Ergebnissen mit Dämmmassen auf Basis der erfindungsgemäßen Baustofftrockenmischung erzielt werden. Die erfindungsgemäße Baustofftrockenmischung und die in dieser erhältliche erfindungsgemäße Dämmmasse zeichnen sich insbesondere dadurch aus, dass sie sowohl ein Aerogel als auch einen Leichtzuschlag in hohen Mengen aufweisen, so dass eine Dämmmasse mit hervorragenden Wärmedämmeigenschaften erhalten wird.

Gemäß einer bevorzugten Ausführungsform der vorliegenden Erfindung ist das zementbasierte Bindemittel Portlandzement, insbesondere Weißzement, vorzugsweise Schnellzement. Bei Schnellzement handelt es sich um Zemente mit einer sehr kurzen Topfzeit von wenigen Minuten, üblicherweise ca. 2 bis 3 Minuten, wobei eine Erstarrung der flüssigen Masse innerhalb einer Stunde, oftmals bereits nach 5 bis 7 Minuten, eintritt. Bei Schnellzement handelt es sich um Zemente, insbesondere Portlandzement, vorzugsweise Weißzement, welchem Beschleuniger zugegeben sind. Geeignete Beschleuniger sind beispielsweise Aluminiumsalze, insbesondere Aluminiumsulfat, Calciumsulfoaluminat oder basische Aluminiumsalze, sowie Beschleuniger auf Basis von Calciumnitrat. Insbesondere durch die Verwendung von Schnellzement lässt sich ein Betonfertigteil in sehr kurzer Zeit herstellen.

Gemäß einer bevorzugten Ausführungsform der vorliegenden Erfindung enthält die Baustofftrockenmischung das zementbasierte Bindemittel in Mengen von 10 bis 45 Gew.-%, vorzugsweise 15 bis 40 Gew.-%, bevorzugt 20 bis 30 Gew.-%, bezogen auf die Baustofftrockenmischung.

Was nun das im Rahmen der erfindungsgemäßen Baustofftrockenmischung eingesetzte Aerogel anbelangt, so hat es sich bewährt, wenn das Aerogel ein anorganisches, insbesondere ein überwiegend anorganisches, Aerogel ist. Besonders gute Ergebnisse werden erhalten, wenn das Aerogel ein Silica-Aerogel und/oder ein Silica-Hybridaerogel ist. Speziell durch die Verwendung von Silica-Aerogelen bzw. Silica-Hybrid-Aerogelen können besonders gute Wärmedämmeigenschaften erreicht werden, wobei gleichzeitig weitere Eigenschaften der erhaltenen Dämmmasse, wie beispielsweise die Brennbarkeit und die mechanische Belastbarkeit, nicht negativ beeinflusst werden.

Besonders gute Ergebnisse werden im Rahmen der vorliegenden Erfindung erhalten, wenn die Baustofftrockenmischung das Aerogel in Mengen von 5 bis 40 Gew.-%, vorzugsweise 10 bis 35 Gew.-%, bevorzugt 15 bis 30 Gew.-%, bezogen auf die Baustofftrockenmischung, enthält.

Üblicherweise weisen die verwendeten Aerogele eine Partikelgröße von 0,01 bis 10 mm, insbesondere 0,05 bis 8 mm, vorzugsweise 0,1 bis 7 mm, bevorzugt 0,2 bis 6 mm, besonders bevorzugt 0,5 bis 5 mm, ganz besonders bevorzugt 0,5 bis 4 mm, äußerst bevorzugt 0,5 bis 2 mm, auf.

Aerogele mit den vorgenannten Partikelgrößen lassen sich hervorragend in zementbasierte Dämmmassen einarbeiten und ergänzen sich im Hinblick auf ihre Partikelgröße mit den Leichtzuschlägen vorzugsweise derart, dass die empfindlichen Aerogelpartikel die Räume in einer Kugelpackung der Partikel des Leichtzuschlags ausfüllen und weitgehend zerstörungsfrei in die Dämmmasse eingearbeitet werden können, so dass Dämmmassen mit hervorragenden Wärmedämmeigenschaften erhalten werden.

Gleichermaßen weisen die Aerogele in der Regel eine Schüttdichte im Bereich von 0,05 bis 20 g/cm³, insbesondere 0,08 bis 0,27 g/cm³, vorzugsweise 0,12 bis 0,25 g/cm³, bevorzugt 0,13 bis 0,22 g/cm³, besonders bevorzugt 0,14 bis 0,20 g/cm³, ganz besonders bevorzugt 0,15 bis 0,16 g/cm³, auf.

Gleichermaßen kann es vorgesehen sein, dass das Aerogel absolute Porendurchmesser im Bereich von 2 bis 400 nm, insbesondere 5 bis 300 nm, vorzugsweise 8 bis 200 nm, bevorzugt 10 bis 130 nm, besonders bevorzugt 10 bis 70 nm, besitzt. Aerogele mit Porendurchmesser in den vorgenannten Bereichen weisen hervorragende Wärmedämmeigenschaften auf.

Wie zuvor bereits ausgeführt, weist die erfindungsgemäße Baustofftrockenmischung einen Leichtzuschlag auf. Besonders gute Ergebnisse werden in diesem Zusammenhang erhalten, wenn der Leichtzuschlag ausgewählt ist aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand, und deren Mischungen.

Gemäß einer bevorzugten Ausführungsform der vorliegenden Erfindung ist der Leichtzuschlag ausgewählt aus der Gruppe von Perlit, insbesondere geblähtem Perlit, Vermiculit, insbesondere geblähtem Vermiculit, und deren Mischungen. Besonders bevorzugt wird es in diesem Zusammenhang, wenn der Leichtzuschlag geblähter Perlit ist.

Was nun die Partikel- bzw. Korngröße des Leichtzuschlages anbelangt, so kann diese naturgemäß in weiten Bereichen variieren. Es hat sich jedoch bewährt, wenn der Leichtzuschlag Korngrößen von höchstens 4 mm, insbesondere höchstens 3 mm, aufweist. Mit Partikel- bzw. Korngrößen in den vorgenannten Bereichen können insbesondere besonders geeignete Mischungen mit dem Aerogel erhalten werden, bei welchen die Aerogelpartikel auch bei Einsatz von Mischmaschinen zur Herstellung von Dämmmassen aus der Baustofftrockenmischung nicht zerstört werden.

Gemäß einer bevorzugten Ausführungsform der vorliegenden Erfindung enthält die Baustofftrockenmischung den Leichtzuschlag in Mengen von 10 bis 50 Gew.-%, vorzugsweise 15 bis 40 Gew.-%, bevorzugt 20 bis 30 Gew.-%, bezogen auf die Baustofftrockenmischung.

Im Rahmen der vorliegenden Erfindung werden gleichfalls besonders gute Ergebnisse erhalten, wenn die Baustofftrockenmischung das Aerogel und den Leichtzuschlag in einem gewichtbasierten Verhältnis von Leichtzuschlag zu Aerogel von 15 : 1 bis 1 : 10, insbesondere 10 : 1 bis 1 : 8, vorzugsweise 5 : 1 bis 1 : 5, bevorzugt 2 : 1 bis 1 : 2, besonders bevorzugt 2 : 1 bis 1 : 1, enthält.

Im Rahmen der vorliegenden Erfindung wird es weiterhin bevorzugt, wenn die Baustofftrockenmischung ein kalkbasiertes Bindemittel, insbesondere Kalk, vorzugsweise hydraulischem Kalk, aufweist. Durch die Verwendung von kalkbasierten Bindemitteln wird das Abbinden des Bindemittels nochmals beschleunigt. Darüber hinaus weist Kalk einen sehr hohen pH-Wert auf, was beispielsweise der Bildung von Schimmel entgegenwirkt.

Wenn die Baustofftrockenmischung ein kalkbasiertes Bindemittel enthält, so hat es sich bewährt, wenn die Baustofftrockenmischung das kalkbasierte Bindemittel in Mengen von 3 bis 40 Gew.-%, insbesondere 5 bis 30 Gew.-%, vorzugsweise 8 bis 28 Gew.-%, bevorzugt 10 bis 20 Gew.-%, bezogen auf die Baustofftrockenmischung, enthält.

Weiterhin kann es im Rahmen der vorliegenden Erfindung vorgesehen sein, dass die Baustofftrockenmischung Fasern, insbesondere anorganische Fasern, vorzugsweise anorganische mineralische Fasern, aufweist. Durch die Verwendung von Fasern kann die Festigkeit und die mechanische Widerstandsfähigkeit der resultierenden Dämmmassen deutlich erhöht werden. Insbesondere ist es möglich, den Anteil an Bindemitteln zu reduzieren, so dass die Wärmedämmeigenschaften der erhaltenen Dämmschichten verbessert sind.

Wie zuvor bereits dargelegt, wird es im Rahmen der vorliegenden Erfindung bevorzugt, wenn die Fasern ausgewählt sind aus Calciumsilikatfasern, Glasfasern, Wollastonitfasern, Kohlenstofffasern, Kohlenstoffnanoröhren und deren Mischungen. Besonders gute Ergebnisse werden jedoch erhalten, wenn die Fasern Calciumsilikatfasern sind.

Was nun die Menge anbelangt, in welcher die Baustofftrockenmischung die Fasern enthält, so hat es sich bewährt, wenn die Baustofftrockenmischung die Fasern in Mengen von 0,1 bis 10 Gew.-%, insbesondere 0,5 bis 5 Gew.-%, vorzugsweise 1 bis 4 Gew.-%, bevorzugt 2 bis 4 Gew.-%, bezogen auf die Baustofftrockenmischung, aufweist. Bereits mit geringen Faseranteilen lässt sich eine deutliche Steigerung der mechanischen Eigenschaften der resultierenden Mörtel bzw. Dämmmassen erzielen und somit der Anteil des Bindemittels reduzieren.

Gemäß einer bevorzugten Ausführungsform der vorliegenden Erfindung ist es vorgesehen, dass die Baustofftrockenmischung mindestens einen Porenbildner aufweist. Die Anwesenheit eines Porenbildners verbessert insbesondere der Frostwiderstand der Dämmschicht sowie die Fließeigenschaften der resultierenden Mörtel bzw. Dämmmassen, so dass nur wenig Wasser zum Anmachen der Dämmmasse benötigt wird. Im Rahmen der vorliegenden Erfindung sind grundsätzlich alle bekannten Porenbildner, insbesondere Luftporenbildner, verwendbar. Üblicherweise ist der Porenbildner ausgewählt aus Ligninsulfonaten, Carboxylverbindungen, Proteinsäuren sowie Harzen, insbesondere Tallharzen und Balsamharzen.

Wenn die Baustofftrockenmischung einen Porenbildner enthält, so enthält die Baustofftrockenmischung den Porenbildner üblicherweise in Mengen von 0,1 bis 5 Gew.-%, insbesondere 0,5 bis 5 Gew.-%, vorzugsweise 1 bis 4 Gew.-%, bevorzugt 2 bis 4 Gew.-%, bezogen auf die Baustofftrockenmischung.

Darüber hinaus kann es im Rahmen der vorliegenden Erfindung vorgesehen sein, dass die Baustofftrockenmischung weiterhin mindestens ein Additiv aufweist. Wenn die Baustofftrockenmischung ein Additiv aufweist, so ist das Additiv üblicherweise ausgewählt aus der Gruppe von Verdickern, Verzögerern, Beschleunigern, Stabilisierungsmitteln (Stabilisatoren), Rheologiestellmitteln, Zusatzmitteln zur Einstellung des Wasserrückhaltevermögens (Wasserretentionsmitteln), Dispergiermitteln, Dichtungsmitteln sowie deren Mischungen. Für den Fall, dass die Baustofftrockenmischung ein Additiv aufweist, so weist die Baustofftrockenmischung das Additiv üblicherweise in Mengen von 0,01 bis 10 Gew.-%, insbesondere 0,1 bis 5 Gew.-%, vorzugsweise 0,3 bis 3 Gew.-%, bevorzugt 0,5 bis 1 Gew.-%, bezogen auf die Baustofftrockenmischung, auf.

Für weitere Einzelheiten zu der erfindungsgemäßen Baustofftrockenmischung kann auf die obigen Ausführungen zu den übrigen Erfindungsaspekten verwiesen werden, welche in Bezug auf die erfindungsgemäße Baustofftrockenmischung entsprechend gelten.

Weiterer Gegenstand der vorliegenden Erfindung - gemäß einem **vierten** Aspekt der vorliegenden Erfindung - ist die Verwendung der zuvor genannten Baustofftrockenmischung zur Herstellung einer Dämmmasse, insbesondere eines Mörtels.

Üblicherweise wird ein Mörtel bzw. eine Dämmmasse aus der erfindungsgemäßen Baustofftrockenmischung durch Anmachen mit Wasser erhalten, d. h. im Rahmen der vorliegenden Erfindung wird zur Herstellung der Dämmmasse die Baustofftrockenmischung mit Wasser versetzt und gemischt.

Wenn die Baustofftrockenmischung zur Herstellung einer Dämmmasse mit Wasser angemacht wird, so hat es sich bewährt, wenn die Baustofftrockenmischung mit Wasser in einem Verhältnis von Baustofftrockenmischung zu Wasser von 1 : 0,5 bis 1 : 2, insbesondere 1 : 0,6 bis 1 : 1,8, vorzugsweise 1 : 0,7 bis 1 : 1,6, bevorzugt 1 : 0,8 bis 1 : 1,4, angemacht wird.

Das Anmachen kann dabei von Hand oder auch maschinell erfolgen. Vorzugsweise wird die Baustofftrockenmischung mit dem Wasser in einem Zwangsmischer angemacht. In diesem Zusammenhang werden vorzugsweise Mischzeiten zwischen 1 und 10 Minuten, vorzugsweise 1 und 5 Minuten, benötigt.

Besonders gute Ergebnisse werden erhalten, wenn das Wasser eine Temperatur zwischen 20 und 70 °C, insbesondere 25 bis 65 °C, vorzugsweise 30 bis 60 °C, aufweist. Mit Wasser im vorgenannten Temperaturbereich ist es möglich, einen Mörtel zu erhalten, welcher Temperaturen von 20 bis 60 °C, insbesondere 20 bis 50 °C, aufweist und aufgrund der erhöhten Temperatur schnell aushärtet.

Für weitergehende Einzelheiten zu der erfindungsgemäßen Verwendung einer Baustofftrockenmischung kann auf die obigen Ausführungen zu den weiteren Erfindungsaspekten verwiesen werden, welche in Bezug auf die erfindungsgemäße Verwendung entsprechend gelten.

Wiederum weiterer Gegenstand der vorliegenden Erfindung - gemäß einem **f ü n f te n** Aspekt der vorliegenden Erfindung - ist eine Dämmmasse, insbesondere ein Mörtel, hergestellt aus der zuvor beschriebenen Baustofftrockenmischung durch Anmachen mit Wasser.

Für weitergehende Einzelheiten zu der erfindungsgemäßen Dämmmasse kann auf die obigen Ausführungen zu den weiteren Erfindungsaspekten verwiesen werden, welche in Bezug auf die erfindungsgemäße Dämmmasse entsprechend gelten.

Schließlich ist weiterer Gegenstand der vorliegenden Erfindung - gemäß einem **sechsten** Aspekt der vorliegenden Erfindung - ein Verfahren zur Herstellung eines Betonfertigteils, insbesondere wie zuvor beschrieben, wobei
(a) in einem ersten Verfahrensschritt eine hohle Form, insbesondere eine Schalung, vorgelegt wird,
(b) nachfolgend in einem zweiten Verfahrensschritt flüssiger Beton zur Ausbildung einer ersten Betonschicht in die hohle Form gefüllt wird, insbesondere bis zu einer vorgegebenen Füllhöhe,
(c) anschließend in einem auf den zweiten Verfahrensschritt (b) folgenden dritten Verfahrensschritt eine mineralisch basierte, insbesondere zementbasierte, Dämmmasse zur Ausbildung einer Dämmschicht in die hohle Form eingefüllt wird, so dass ein Rohdämmelement mit einer Betonschicht und einer Dämmschicht gebildet wird, und
nachfolgend das Rohdämmelement ausgehärtet, insbesondere teilweise ausgehärtet wird, so dass ein Dämmelement erhalten wird.

Unter einem Dämmelement ist im Rahmen der vorliegenden Verbindung ein mindestens zweischichtiges Betonfertigteil aus Betonschicht und Dämmschicht zu verstehen, bei welchem die Betonschicht und die Dämmschicht zumindest teilweise ausgebildet sind. Das Dämmelement kann entweder weiterverarbeitet werden, beispielsweise zu Doppelschichtelementen, welche mindestens zwei Betonschichten aufweisen, oder gegebenenfalls nach einem Nachhärtevorgang verbaut werden.

Was die Temperaturen anbelangt, bei welchem das Rohdämmelement ausgehärtet wird, insbesondere teilweise ausgehärtet wird, so hat es sich bewährt, wenn das Rohdämmelement bei Temperaturen im Bereich von 20 bis 80 °C, insbesondere 30 bis 70 °C, vorzugsweise 40 bis 60 °C, ausgehärtet wird. Das Aushärten erfolgt dabei vorzugsweise in einer Klimakammer. In diesem Zusammenhang ist es üblicherweise vorgesehen, dass das Rohdämmelement nur teilweise ausgehärtet wird, d. h. dass das Rohdämmelement zwar formstabil ist, jedoch noch nicht vollständig durchgehärtet ist.

Was nun den Zeitraum anbelangt, über welchen das Rohdämmelement ausgehärtet wird, so wird das Rohdämmelement üblicherweise über einen Zeitraum von 4 bis 20 Stunden, insbesondere 5 bis 15 Stunden, vorzugsweise 8 bis 12 Stunden, ausgehärtet. Bei den vorgenannten Aushärtezeiten ist das Rohdämmelement so weit ausgehärtet, dass es formstabil ist und weiterverarbeitet werden kann, wobei jedoch die Produktionskapazitäten durch lange Lagerzeiten nicht unnötig belastet werden.

Im Rahmen der vorliegenden Erfindung kann es weiterhin vorgesehen sein, dass das Rohdämmelement mit einer Bewehrung, insbesondere einer ersten Bewehrung, versehen wird. Die Bewehrung kann dabei entweder allein in der ersten Betonschicht vorhanden sein oder Betonschicht und Dämmschicht verbinden bzw. in der Betonschicht verankert sein und sich gegebenenfalls über die Dämmschicht hinaus erstrecken.

In diesem Zusammenhang kann es vorgesehen sein, dass die Bewehrung in der hohlen Form im ersten Verfahrensschritt (a) vorgelegt wird oder dass die Bewehrung im Anschluss an den dritten Verfahrensschritt (c) in das Rohdämmelement eingebracht wird, insbesondere durch Eindrücken in die noch flüssige Betonschicht und/oder Dämmschicht. Im Rahmen der vorliegenden Erfindung wird es bevorzugt, wenn die Bewehrung im Anschluss an den dritten Verfahrensschritt (c) in das Rohdämmelement eingebracht wird, insbesondere vor Aushärten des Rohdämmelementes.

Dies gilt insbesondere dann, wenn eine Bewehrung verwendet wird, welche sich sowohl innerhalb der Betonschicht als auch innerhalb der Dämmschicht erstreckt und gegebenenfalls über die Dämmschicht hinausragt.

Besonders gute Ergebnisse werden erhalten, wenn die Bewehrung aus einem Material mit geringer Wärmeleitfähigkeit, insbesondere einer Wärmeleitfähigkeit von weniger als 5 W/(mK), vorzugsweise weniger als 2 W/(mK), bevorzugt weniger als 1 W/(mK), besteht. Insbesondere wird es in diesem Zusammenhang bevorzugt, wenn das Material die Bewehrung ausgewählt aus Kunststoffen, insbesondere aus faserverstärkten Kunststoffen, vorzugsweise aus glasfaser- und/oder carbonfaserverstärkten Kunststoffen.

Gemäß einer bevorzugten Ausführungsform der vorliegenden Erfindung ist es vorgesehen, dass sich die Bewehrung von der Betonschicht in die Dämmschicht des Rohdämmelements erstreckt. In diesem Zusammenhang wird es besonders bevorzugt, wenn sich die Bewehrung von der Betonschicht über die Dämmschicht des Rohdämmmaterials hinaus erstreckt und beispielsweise so die Betonschicht und die Dämmschicht mit einer weiteren Betonschicht verbindet. Im Rahmen der vorliegenden Erfindung wird es darüber hinaus bevorzugt, wenn nach Einfüllen des flüssigen Betons in die hohle Form im zweiten Verfahrensschritt (b) eine Verdichtung durchgeführt wird, insbesondere durch Rütteln. Gleichermaßen wird es bevorzugt, wenn nach Einfüllen der Dämmmasse eine Verdichtung, insbesondere durch Rütteln, durchgeführt wird. Wenn eine Verdichtung nach Einfüllen der Dämmmasse erfolgt, so kann entweder auf das Verdichten nach Einfüllen des Betons verzichtet werden oder es wird sowohl nach Einfüllen des Betons als auch nach Einfüllen der Dämmmasse verdichtet. Im Rahmen der vorliegenden Erfindung wird es bevorzugt, wenn sowohl nach Einfüllen des Betons als auch nach Einfüllen der Dämmmasse jeweils eine Verdichtung durchgeführt wird.

Im Rahmen der vorliegenden Erfindung ist es üblicherweise vorgesehen, dass das Dämmelement aus der hohlen Form, insbesondere der Schalung, entfernt wird, insbesondere nach dem Aushärten. Nach Entfernen der Schalung kann das Dämmelement entweder sofort eingesetzt oder beispielsweise weiterverarbeitet werden, insbesondere zu einem Doppelschichtelement.

Im Rahmen der vorliegenden Erfindung kann es gleichfalls vorgesehen sein, dass nach Entfernung des Dämmelementes aus der hohlen Form, insbesondere der Schalung, das Dämmelement einem Verfahrensschritt zur Härtung der Oberfläche der Dämmschicht, insbesondere der Oberfläche der Kanten der Dämmschicht, unterzogen wird. Das Verfahren zur Behandlung der Oberfläche der Dämmschicht wird vorzugsweise unter Verwendung eines Oberflächenbehandlungsmittels wie zuvor dargelegt durchgeführt.

Im Rahmen der vorliegenden Erfindung kann es weiterhin vorgesehen sein, dass, insbesondere im Anschluss an die zuvor beschriebenen Verfahrensschritte, eine weitere hohle Form, insbesondere Schalung, vorgelegt und mit flüssigem Beton zur Ausbildung einer zweiten Betonschicht befüllt wird, insbesondere bis zu einer vorgegebenen Füllhöhe, und anschließend das Dämmelement mit der Seite der Dämmschicht mit der zweiten Betonschicht stoffschlüssig oder beabstandet, vorzugsweise beabstandet, verbunden wird, so dass ein Rohdoppelschichtelement, insbesondere ein Rohdoppelwandelement, erhalten wird.

Im Rahmen der vorliegenden Erfindung wird vorzugsweise derart vorgegangen, dass nach Fertigstellung des Dämmelementes, das Dämmelement aus der Schalung entnommen wird und anschließend eine zweite Schalung vorgelegt und mit Beton befüllt wird. Anschließend wird das Dämmelement mit der Seite der Dämmschicht mit der zweiten Betonschicht verbunden, entweder durch direktes Auflegen der Dämmschicht auf die zweite Betonschicht, was zu einer stoffschlüssigen Verbindung führt, oder durch Eintauchen und/oder Eindrücken einer Bewehrung, welche in dem Dämmelement vorhanden ist und über die Dämmschicht hinausragt, in die zweite Betonschicht, so dass die Dämmschicht von der zweiten Betonschicht beabstandet sein kann und trotzdem ein Betonfertigteil erhalten wird.

In diesem Zusammenhang kann es weiterhin vorgesehen sein, dass nach Einfüllen der zweiten Betonschicht in die hohle Form die zweite Betonschicht verdichtet wird, insbesondere durch Rütteln.

Im Rahmen der vorliegenden Erfindung ist es üblicherweise vorgesehen, dass das Rohdoppelschichtelement ausgehärtet, insbesondere teilweise ausgehärtet wird. Besonders gute Ergebnisse werden in diesem Zusammenhang erhalten, wenn das Rohdoppelschichtelement bei Temperaturen im Bereich von 20 bis 80 °C, insbesondere 30 bis 70 °C, vorzugsweise 40 bis 80 °C, ausgehärtet wird, so dass ein Doppelschichtelement, insbesondere ein Doppelwandelement, erhalten wird.

Gleichermaßen hat es sich bewährt, wenn das Rohdoppelschichtelement für einen Zeitraum von 4 bis 20 Stunden, insbesondere 5 bis 15 Stunden, vorzugsweise 8 bis 12 Stunden, ausgehärtet wird.

Im Rahmen der vorliegenden Erfindung kann es gemäß einer bevorzugten Ausführung vorgesehen sein, dass das Dämmelement vor dem Verbinden mit der zweiten Betonschicht mit einer zweiten Bewehrung versehen wird oder dass die weitere hohle Form mit einer zweiten Bewehrung versehen wird. Die zweite Bewehrung kann beispielsweise an der ersten Bewehrung befestigt werden. Alternativ kann es auch vorgesehen sein, dass die zweite Bewehrung an der Dämmschicht verankert wird, wobei die Dämmschicht jedoch nicht durchdrungen wird. Vorzugsweise durchdringt die zweite Bewehrung die Dämmschicht in keiner Ausführungsform der vorliegenden Erfindung. Besonders bevorzugt wird es dabei, wenn die zweite Bewehrung nicht in die Dämmschicht eindringt.

Üblicherweise ist im Rahmen der vorliegenden Erfindung vorgesehen, dass die zweite Bewehrung aus einem Metall, insbesondere aus einem eisenhaltigen Metall, vorzugsweise aus Stahl, besteht.

Gemäß einer bevorzugten Ausgestaltung dieser Ausführungsform ist es vorgesehen, dass sich die zweite Bewehrung in der zweiten Betonschicht erstreckt und/oder dass sich die zweite Bewehrung über die zweite Betonschicht hinaus erstreckt, insbesondere in den Hohlraum bzw. Spalt zwischen der zweiten Betonschicht und der Dämmschicht.

Im Rahmen der vorliegenden Erfindung ist es üblicherweise vorgesehen, dass das Doppelschichtelement anschließend aus der zweiten hohlen Form entfernt wird.

Nach Entfernung des Doppelschichtelementes aus der zweiten hohlen Form wird das Doppelwandelement üblicherweise nachgehärtet, insbesondere über einen Zeitraum von 2 bis 4 Wochen. Das Nachhärten erfolgt üblicherweise durch Lagerung bei Umgebungsbedingungen.

Gemäß einer bevorzugten Ausführungsform der vorliegenden Erfindung, betrifft die vorliegende Erfindung ein zuvor beschriebenes Verfahren zur Herstellung eines Fertigbetonteils, wie zuvor beschrieben, wobei
(a) in einem ersten Verfahrensschritt eine hohle Form, insbesondere eine Schalung, vorgelegt wird,
(b) nachfolgend in einem zweiten Verfahrensschritt flüssiger Beton zur Ausbildung einer ersten Betonschicht in die hohle Form gefüllt wird, insbesondere bis zu einer vorgegebenen Füllhöhe, und gegebenenfalls die Betonschicht verdichtet wird,
(c) anschließend in einem auf den zweiten Verfahrensschritt (b) folgenden dritten Verfahrensschritt eine mineralisch basierte, insbesondere zementbasierte, Dämmmasse zur Ausbildung einer Dämmschicht in die hohle Form eingefüllt wird, so dass ein Rohdämmelement mit einer Betonschicht und einer Dämmschicht gebildet wird, und gegebenenfalls die Dämmschicht bzw. die erste Betonschicht und die Dämmschicht verdichtet wird,
(d) in einem nachfolgenden vierten Verfahrensschritt das Rohdämmelement mit einer ersten Bewehrung versehen wird,
(e) nachfolgend in einem fünften Verfahrensschritt das Rohdämmelement ausgehärtet, insbesondere teilweise ausgehärtet, wird, so dass ein Dämmelement erhalten wird,
(f) gegebenenfalls in einem nachfolgenden sechsten Verfahrensschritt das Dämmelement aus der hohlen Form entfernt wird,
(g) gegebenenfalls in einem siebten Verfahrensschritt die Oberfläche der Dämmschicht, insbesondere die Oberflächen der Kanten der Dämmschicht, einer Oberflächenbehandlung unterzogen werden,
(h) nachfolgend, insbesondere in einem achten Verfahrensschritt, das Dämmelement mit einer zweiten Bewehrung versehen wird,
(i) wiederum nachfolgend, insbesondere in einem neunten Verfahrensschritt, eine zweite hohle Form, insbesondere Schalung, vorgelegt wird,
(j) nachfolgend, insbesondere in einem zehnten Verfahrensschritt, die zweite hohle Form bis zu einer vorgegebenen Füllhöhe befüllt wird, so dass eine zweite Betonschicht gebildet wird, und gegebenenfalls die zweite Betonschicht verdichtet wird,
(k) nachfolgend, insbesondere in einem elften Verfahrensschritt, das Dämmelement mit der Seite der Dämmschicht mit der zweiten Betonschicht verbunden wird, insbesondere über die erste Bewehrung, so dass ein Rohdoppelschichtelement erhalten wird,
(l) nachfolgend, insbesondere in einem zwölften Verfahrensschritt, das Rohdoppelwandelement ausgehärtet, insbesondere teilweise ausgehärtet wird, so dass ein Doppelschichtelement erhalten wird,
(m) nachfolgend, insbesondere in einem dreizehnten Verfahrensschritt, das Doppelschichtelement aus der zweiten hohlen Form entfernt wird und
(n) nachfolgend, insbesondere in einem vierzehnten Verfahrensschritt, das Doppeschichtelement nachgehärtet wird.

Für weitergehende Einzelheiten zu dem erfindungsgemäßen Verfahren kann auf die obigen Ausführungen zu den übrigen Erfindungsaspekten verwiesen werden, welche in Bezug auf das erfindungsgemäße Verfahren entsprechend gelten.

Der Gegenstand der vorliegenden Erfindung wird nachfolgend durch die Figurenbeschreibung und die Ausführungsbeispiele anhand bevorzugter Ausführungsformen erläutert und eingehender spezifiziert, ohne den Gegenstand der vorliegenden Erfindung jedoch auf diese spezifischen und bevorzugten Ausführungsformen zu beschränken.

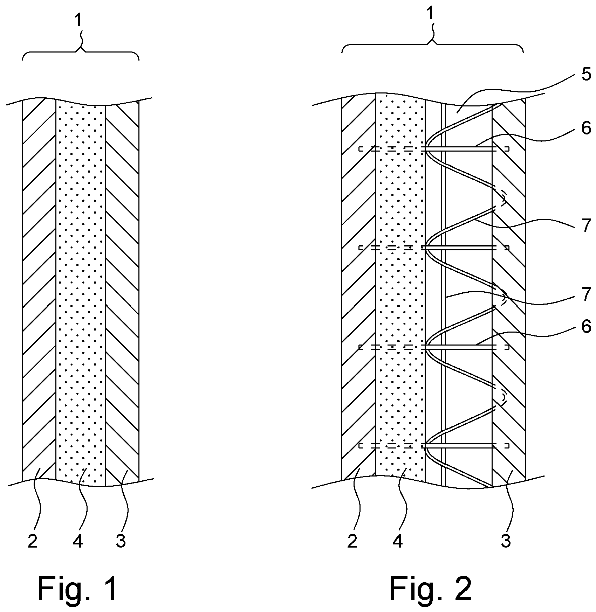

Es zeigt Fig. 1 in einer Querschnittsdarstellung einen Schichtaufbau eines erfindungsgemäßen Betonfertigteils 1, welches aus zwei parallelen Betonschichten 2 und 3, nämlich einer ersten Betonschicht 2 in Form einer Außenschale und einer zweiten Betonschicht 3 in Form einer Innenschale, und einer zwischen den Betonschichten 2 und 3 liegenden Dämmschicht 4 gebildet wird.

In der in Fig. 1 gewählten Ausführungsform sind sowohl die erste Betonschicht 2 als auch die zweite Betonschicht 3 jeweils stoffschlüssig und unmittelbar mit der Dämmschicht 4 verbunden. Es kann gemäß dieser Ausführungsform vorgesehen sein, dass die erste Betonschicht 2 eine in der Figurendarstellung nicht abgebildete Bewehrung, insbesondere eine Stahlbewehrung, aufweist und/oder dass die zweite Betonschicht 3 eine Bewehrung, insbesondere Stahlbewehrung, aufweist. Vorzugsweise durchdringen diese Bewehrungen, insbesondere Stahlbewehrungen, die Dämmschicht 4 nicht. Gleichermaßen kann es vorgesehen sein, dass eine Bewehrung die erste Betonschicht 2 und die zweite Betonschicht 3 miteinander verbindet, d. h. die Dämmschicht durchdringt. In diesem Fall besteht die Bewehrung üblicherweise aus einem wenig wärmeleitenden Material, vorzugsweise aus faserverstärkten Kunststoffen.

Es zeigt Fig. 2 einen Querschnitt einer weiteren und bevorzugten Ausführungsform eines erfindungsgemäßen Betonfertigteils 1 in Form eines Doppelschichtelements, insbesondere eines Doppelwandelements, welches eine erste Betonschicht 2 als Außenschale und eine zweite Betonschicht 3 als Innenschale aufweist. Zwischen der ersten Betonschicht 2 und der zweiten Betonschicht 3 sind eine Dämmschicht 4 sowie ein Hohlraum 5 angeordnet. Der Hohlraum 5 wird bei Verbau des Betonfertigteils 1 mit Verguss- bzw. Ortbeton verfüllt, so dass über mehrere Betonfertigteile 1 hinweg eine durchgehende fugenlose Betonschicht erhalten wird.

Das Betonfertigteil 1 weist ferner eine erste Bewehrung 6 auf, welche vorzugsweise aus einem wenig wärmeleitendem Material, insbesondere aus einem faserverstärkten Kunststoff, insbesondere einem karbonfaserverstärkten Kunststoff, besteht. Die Bewehrung 6 verbindet die erste Betonschicht 2 mit der zweiten Betonschicht 3 und durchdringt dabei die Dämmschicht 4 vollständig. Die Bewehrung 6 verleiht dem Betonfertigteil 1 zum einen seine Festigkeit und ermöglicht überhaupt die Konstruktion des Hohlraumes 5, d. h. eines Doppelschichtelements, insbesondere eines Doppelwandelementes, welches vor Ort auf der Baustelle mit Ortbeton bzw. Vergussbeton befüllt wird.

Des Weiteren weist das Betonfertigteil 1 eine zweite Bewehrung 7 aus Stahl auf, welche an der ersten Bewehrung 6 befestigt ist und darüber hinaus in der zweiten Betonschicht 3 befestigt, insbesondere verankert ist.

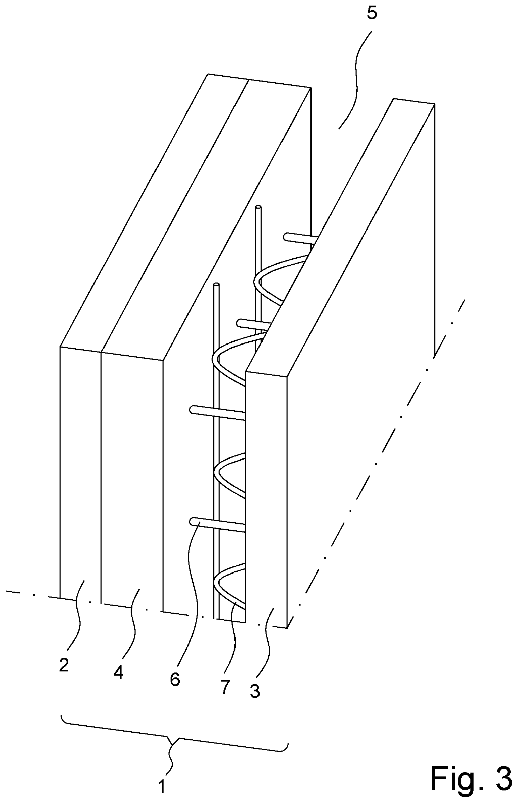

Fig. 3 zeigt eine perspektivische Darstellung des in Fig. 2 dargestellten Betonfertigteils 1.

Weiterhin sind folgende Aspekte Gegenstand der Erfindung:
1. Betonfertigteil (1), aufweisend mindestens eine Betonschicht (2) und eine Dämmschicht (4), wobei die Dämmschicht (4) an der Betonschicht angeordnet ist,
   dadurch gekennzeichnet,
   dass die Dämmschicht (4) mineralisch basiert, insbesondere zementbasiert, ist.
2. Betonfertigteil nach Aspekt 1, dadurch gekennzeichnet, dass die Dämmschicht (4) mittelbar und/oder unmittelbar, vorzugsweise unmittelbar, an der Betonschicht (2) angeordnet ist, insbesondere auf diese aufgebracht ist.
3. Betonfertigteil (1) nach Aspekt 2, dadurch gekennzeichnet, dass die Dämmschicht (4) ohne Verwendung von Klebstoffen und/oder Mörteln an der Betonschicht (2) angeordnet ist.
4. Betonfertigteil (1) nach einem der vorangehenden Aspekte, dadurch gekennzeichnet, dass die Dämmschicht (4) mindestens eine Fläche der Betonschicht (2) insbesondere zumindest bereichsweise, vorzugsweise zum überwiegenden Teil, bevorzugt nahezu vollflächig, bedeckt.
5. Betonfertigteil (1) nach einem der vorangehenden Aspekte, dadurch gekennzeichnet, dass die Dämmschicht (4) zu mindestens 90 Gew.-%, insbesondere 95 Gew.-%, vorzugsweise 97 Gew.-%, bevorzugt 98 Gew.-%, bezogen auf die Dämmschicht (4), aus anorganischen Materialien besteht.
6. Betonfertigteil (1) nach einem der vorangehenden Aspekte, dadurch gekennzeichnet, dass die Dämmschicht (4) zu 90 bis 100 Gew.-%, insbesondere 95 bis 100 Gew.-%, vorzugsweise 97 bis 100 Gew.-%, bevorzugt 98 bis 100 Gew.-%, bezogen auf die Dämmschicht (4), aus anorganischen Materialien besteht.
7. Betonfertigteil (1) nach einem der vorangehenden Aspekte, dadurch gekennzeichnet, dass die Dämmschicht (4) anorganische Füllstoffe, insbesondere mineralische Füllstoffe, in Mengen von mindestens 20 Gew.-%, insbesondere 40 Gew.-%, vorzugsweise 50 Gew.-%, bevorzugt 60 Gew.-%, bezogen auf die Dämmschicht (4), aufweist.
8. Betonfertigteil (1) nach einem der vorangehenden Aspekte, dadurch gekennzeichnet, dass die Dämmschicht (4) anorganische Füllstoffe, insbesondere mineralische Füllstoffe, in Mengen von 20 bis 80 Gew.-%, insbesondere 40 bis 75 Gew.-%, vorzugsweise 50 bis 70 Gew.-%, bevorzugt 60 bis 70 Gew.-%, bezogen auf die Dämmschicht (4), aufweist.
9. Betonfertigteil (1) nach Aspekt 7 oder 8, dadurch gekennzeichnet, dass der anorganisch Füllstoffe ausgewählt aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand, Silica-Aerogelen, Silica-Hybridaerogelen und deren Mischungen, vorzugsweise ausgewählt ist aus der Gruppe von Perlit, insbesondere geblähtem Perlit, Vermiculit, insbesondere geblähtem Vermiculit, Aerogelen, insbesondere Silica-Aerogelen und/oder Silica-Hybridaerogelen, und deren Mischungen, bevorzugt deren Mischungen.
10. Betonfertigteil (1) nach einem der vorangehenden Aspekte, dadurch gekennzeichnet, dass die Dämmschicht (4) einen Leichtzuschlag ausgewählt aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand und deren Mischungen, vorzugsweise ausgewählt aus der Guppe von Perlit, insbesondere geblähtem Perlit, Vermiculit, insbesondere geblähtem Vermiculit, und deren Mischungen, in Kombination mit einem anorganischen Füllstoff in Form eines Aerogels, insbesondere eines Silica-Aerogels und/oder eines Silica-Hybridaerogels, aufweist.
11. Betonfertigteil (1) nach Aspekt 10, dadurch gekennzeichnet, dass die Dämmschicht (4) einen gewichtsbezogenes Verhältnis von Leichtzuschlag zu Aerogel im Bereich von 15 : 1 bis 1 : 10, insbesondere 10 : 1 bis 1 : 8, vorzugsweise 5 : 1 bis 1 : 5, bevorzugt 2 : 1 bis 1 : 2, besonders bevorzugt 2 : 1 bis 1 : 1, aufweist.
12. Betonfertigteil (1) nach einem der vorangehenden Aspekte, dadurch gekennzeichnet, dass die Dämmschicht (4) Fasern, insbesondere anorganische Fasern, vorzugsweise mineralische, Fasern, enthält.
13. Betonfertigteil (1) nach Aspket 12, dadurch gekennzeichnet, dass die Fasern ausgewählt sind aus Calciumsilikatfasern, Glasfasern, Wollastonitfasern, Kohlenstofffasern, Kohlenstoffnanoröhren und deren Mischungen, vorzugsweise Calciumsilikatfasern sind.
14. Betonfertigteil (1) nach Aspekt 12 oder 13, dadurch gekennzeichnet, dass die Dämmschicht (4) die Fasern in Mengen von 0,1 bis 20 Gew.-%, insbesondere 0,2 bis 15 Gew.-%, insbesondere 0,5 bis 12 Gew.-%, bevorzugt 1 bis 10 Gew.-%, bezogen auf die Dämmschicht (4), aufweist.
15. Betonfertigteil (1) nach einem der vorangehenden Aspekte, dadurch gekennzeichnet, dass die Dämmschicht (4) ein zementbasiertes Bindemittel aufweist.
16. Betonfertigteil (1) nach einem der vorangehenden Aspekte, dadurch gekennzeichnet, dass die Dämmschicht (4) eine Wärmeleitfähigkeit im Bereich von 0,025 bis 0,050 W/(mK), insbesondere 0,030 bis 0,045 W/(mK), vorzugsweise 0,035 bis 0,042 W/(mK), aufweist.
17. Betonfertigteil (1) nach einem der vorangehenden Aspekte, dadurch gekennzeichnet, dass die Dämmschicht (4) eine Wasserdampfdiffusionswiderstandszahl µ, bestimmt nach DIN EN ISO 12542, im Bereich von 2 bis 9, insbesondere 3 bis 7, vorzugsweise 4 bis 6, aufweist.
18. Betonfertigteil (1) nach einem der vorangehenden Aspekte, dadurch gekennzeichnet, dass die Dämmschicht (4) eine Trockenrohdichte im Bereich von 125 bis 250 kg/m³, insbesondere 140 bis 225 kg/m³, vorzugsweise 150 bis 200 kg/m³, aufweist.
19. Betonfertigteil (1) nach einem der vorangehenden Aspekte, dadurch gekennzeichnet, dass die Dämmschicht (4) die Brennbarkeit A1 oder A2 gemäß DIN 4102 aufweist.
20. Betonfertigteil (1) nach einem der vorangehenden Aspekte, dadurch gekennzeichnet, dass das Betonfertigteil (1) ein kerngedämmtes Betonfertigteil ist.
21. Betonfertigteil (1) nach einem der vorangehenden Aspekte, dadurch gekennzeichnet, dass das Betonfertigteil (1) einen mehrschichtigen Aufbau, aufweisend
   (I) einer erste Betonschicht (2),
   (II) eine zweite Betonschicht (3) und
   (III) eine Dämmschicht (4), welche zwischen der ersten Betonschicht (2) und der zweiten Betonschicht (3) angeordnet ist,
   besitzt,
   dadurch gekennzeichnet,
   dass die Dämmschicht (4) mineralisch basiert, insbesondere zementbasiert, ist.
22. Betonfertigteil (1) nach Aspekt 20 oder 21, dadurch gekennzeichnet, dass die erste Betonschicht (2) und die zweite Betonschicht (3) insbesondere zumindest bereichsweise parallel angeordnet sind.
23. Betonfertigteil (1) nach einem der Aspekte 20 bis 22, dadurch gekennzeichnet, dass die Dämmschicht (4) mittelbar und/oder unmittelbar an der ersten Betonschicht (2) und/oder der zweiten Betonschicht (3) angeordnet ist.
24. Betonfertigteil (1) nach Aspekt 23, dadurch gekennzeichnet, dass Dämmschicht (4) unmittelbar an der ersten Betonschicht (2) angeordnet ist.
25. Betonfertigteil (1) nach Aspket 23 oder 24, dadurch gekennzeichnet, dass Dämmschicht (4) mittelbar und/oder unmittelbar, vorzugsweise unmittelbar, an der zweiten Betonschicht (3) angeordnet ist.
26. Betonfertigteil (1) nach einem der Aspekte 20 bis 24, dadurch gekennzeichnet, dass die Dämmschicht (4) und die zweite Betonschicht (3) beabstandet sind.
27. Betonfertigteil (1) nach Aspekt 26, dadurch gekennzeichnet, dass die Dämmschicht (4) und die zweite Betonschicht (3) einen Abstand von 6 bis 30 cm, insbesondere 7 bis 20 cm, vorzugsweise 8 bis 15 cm, bevorzugt 9 bis 12 cm, aufweisen.
28. Betonfertigteil (1) nach einem der Aspekte 20 bis 27, dadurch gekennzeichnet, dass das Betonfertigteil (1) mindestens eine Bewehrung (6,7) aufweist.
29. Betonfertigteil (1) nach einem der Aspekte 20 bis 28, dadurch gekennzeichnet, dass das Betonfertigteil (1) eine Bewehrung (6), insbesondere eine erste Bewehrung, aus einem Material mit geringer Wärmeleitfähigkeit, insbesondere mit einer Wärmeleitfähigkeit von weniger als 5 W/(mK), vorzugsweise weniger als 2 W/(mK), bevorzugt weniger als 1 W/(mK), aufweist.
30. Betonfertigteil (1) nach Aspekt 29, dadurch gekennzeichnet, dass das Material der Bewehrung (6) aus einem Material mit geringer Wärmeleitfähigkeit ausgewählt ist aus Kunststoffen, insbesondere aus faserverstärkten Kunststoffen, vorzugsweise aus glasfaser- und/oder karbonfaserverstärkten Kunststoffen.
31. Betonfertigteil (1) nach einem der Aspekte 29 bis 30, dadurch gekennzeichnet, dass die Bewehrung (6) die erste Betonschicht (2) und die zweite Betonschicht (3) verbindet, insbesondere wobei die Bewehrung (6) die Dämmschicht (4) durchdringt.
32. Betonfertigteil (1) nach einem der Aspekte 20 bis 31, dadurch gekennzeichnet, dass das Betonfertigteil (1) eine Bewehrung (7), insbesondere eine zweite Bewehrung, aus einem Metall, insbesondere einem eisenhaltigen Metall, vorzugsweise Stahl, aufweist.
33. Betonfertigteil (1) nach Aspekt 32, dadurch gekennzeichnet, dass die Bewehrung (7) in der zweiten Betonschicht (3) angeordnet ist und gegebenenfalls in einen Hohlraum zwischen der zweiten Betonschicht (3) und der Dämmschicht (4) reicht.
34. Betonfertigteil (1) nach Aspekt 32 oder 33, dadurch gekennzeichnet, dass die Bewehrung (7) in der zweiten Betonschicht (3) und in dem Hohlraum zwischen der zweiten Betonschicht (3) und der Dämmschicht (4) angeordnet ist.
35. Betonfertigteil (1) nach einem der vorangehenden Aspekte, dadurch gekennzeichnet, dass das Betonfertigteil (1) die Brennbarkeit A1 oder A2 gemäß DIN 4102 aufweist.
36. Betonfertigteil (1) nach einem der vorangehenden Aspekte, dadurch gekennzeichnet, dass die Dämmschicht (4) eine Schichtdicke von 2 bis 30 cm, insbesondere 3 bis 25 cm, vorzugsweise 5 bis 20 cm, bevorzugt 8 bis 15 cm, aufweist.
37. Betonfertigteil (1) nach einem der vorangehenden Aspekte, dadurch gekennzeichnet, dass die erste Betonschicht (2) eine Schichtdicke von 1,5 bis 15 cm, insbesondere 2 bis 12 cm, vorzugsweise 3 bis 10 cm, bevorzugt 4 bis 8 cm, aufweist.
38. Betonfertigteil (1) nach einem der vorangehenden Aspekte, dadurch gekennzeichnet, dass die zweite Betonschicht (3) eine Schichtdicke von 1,5 bis 15 cm, insbesondere 2 bis 12 cm, vorzugsweise 3 bis 10 cm, bevorzugt 4 bis 8 cm, aufweist.
39. Betonfertigteil (1) nach einem der vorangehenden Aspekte, dadurch gekennzeichnet, dass die Oberfläche der Dämmschicht (4), insbesondere die Oberfläche der Dämmschicht (4) in Kantenbereichen, einer Behandlung zur Festigung der Oberfläche unterzogen wurde.
40. Betonfertigteil (1) nach einem der vorangehenden Aspekte, dadurch gekennzeichnet, dass das Betonfertigteil (1) ein Wandelement und/oder ein Deckenelement ist.
41. Verwendung eines Betonfertigteils nach einem der Aspekte 1 bis 40 zur Erstellung von Bauwerken, insbesondere von Häusern.
42. Baustofftrockenmischung zur Erzeugung einer Dämmmasse zur Herstellung einer Dämmschicht, dadurch gekennzeichnet, dass die Baustofftrockenmischung
   (A) ein zementbasiertes Bindemittel in Mengen von 5 bis 50 Gew.-%, bezogen auf die Baustofftrockenmischung,
   (B) ein Aerogel in Mengen von 3 bis 50 Gew.-%, bezogen auf die Baustofftrockenmischung, und
   (C) mindestens einen Leichtzuschlag in Mengen von 5 bis 60 Gew.-%, bezogen auf die Baustofftrockenmischung,
   aufweist.
43. Baustofftrockenmischung nach Aspekt 42, dadurch gekennzeichnet, dass das zementbasierte Bindemittel Portlandzement, insbesondere Weißzement, vorzugsweise Schnellzement, ist.
44. Baustofftrockenmischung nach Aspekt 42 oder 43, dadurch gekennzeichnet, dass die Baustofftrockenmischung das zementbasierte Bindemittel in Mengen von 10 bis 45 Gew.-%, vorzugsweise 15 bis 40 Gew.-%, bevorzugt 20 bis 30 Gew.-%, bezogen auf die Baustofftrockenmischung, enthält.
45. Baustofftrockenmischung nach einem der Aspekte 42 bis 44, dadurch gekennzeichnet, dass das Aerogel ein Silica-Aerogel und/oder ein Silica-Hybrid-Aerogel ist.
46. Baustofftrockenmischung nach einem der Aspekte 42 bis 45, dadurch gekennzeichnet, dass die Baustofftrockenmischung das Aerogel in Mengen von 5 bis 40_Gew.-%, vorzugsweise 10 bis 35 Gew.-%, bevorzugt 15 bis 30 Gew.-%, bezogen auf die Baustofftrockenmischung, enthält.
47. Baustofftrockenmischung nach einem der Aspekte 42 bis 46, dadurch gekennzeichnet, dass der Leichtzuschlag ausgewählt aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand, und deren Mischungen, vorzugsweise ausgewählt ist aus der Guppe von Perlit, insbesondere geblähtem Perlit, Vermiculit, insbesondere geblähtem Vermiculit, und deren Mischungen.
48. Baustofftrockenmischung nach einem der Aspekte 42 bis 47, dadurch gekennzeichnet, dass die Baustofftrockenmischung den Leichtzuschlag in Mengen von 10 bis 50 Gew.-%, vorzugsweise 15 bis 40 Gew.-%, bevorzugt 20 bis 30 Gew.-%, bezogen auf die Baustofftrockenmischung, enthält.
49. Baustofftrockenmischung nach einem der Aspekte 42 bis 48, dadurch gekennzeichnet, dass die Baustofftrockenmischung ein kalkbasiertes Bindemittel, insbesondere Kalk, vorzugsweise hydraulischen Kalk, aufweist.
50. Baustofftrockenmischung nach Aspekt 49, dadurch gekennzeichnet, dass die Baustofftrockenmischung das kalkbasierte Bindemittel in Mengen von 3 bis 40 Gew.-%, insbesondere 5 bis 30 Gew.-%, vorzugsweise 8 bis 28 Gew.-%, bevorzugt 10 bis 20 Gew.-%, bezogen auf die Baustofftrockenmischung, enthält.
51. Baustofftrockenmischung nach einem der Aspekte 42 bis 50, dadurch gekennzeichnet, dass die Baustofftrockenmischung Fasern, insbesondere anorganische Fasern, vorzugsweise mineralische Fasern, aufweist.
52. Baustofftrockenmischung nach Aspekt 51, dadurch gekennzeichnet, dass die Fasern ausgewählt sind aus Calciumsilikatfasern, Glasfasern, Wollastonitfasern, Kohlenstofffasern, Kohlenstoffnanoröhren und deren Mischungen, vorzugsweise Calciumsilikatfasern.
53. Baustofftrockenmischung nach Aspekt 51 oder 52, dadurch gekennzeichnet, dass die Baustofftrockenmischung die Fasern in Mengen von 0,1 bis 10 Gew.-%, insbesondere 0,5 bis 5 Gew.-%, vorzugsweise 1 bis 4 Gew.-%, bevorzugt 2 bis 4 Gew.-%, bezogen auf die Baustofftrockenmischung, aufweist.
54. Baustofftrockenmischung nach einem der Aspekte 42 bis 53, dadurch gekennzeichnet, dass die Baustofftrockenmischung mindestens einen Porenbildner aufweist.
55. Baustofftrockenmischung nach Aspekt 54, dadurch gekennzeichnet, dass die Baustofftrockenmischung den Porenbildner in Mengen von 0,1 bis 5 Gew.-%, insbesondere 0,5 bis 5 Gew.-%, vorzugsweise 1 bis 4 Gew.-%, bevorzugt 2 bis 4 Gew.-%, bezogen auf die Baustofftrockenmischung, aufweist.
56. Baustofftrockenmischung nach einem der Aspekte 42 bis 53, dadurch gekennzeichnet, dass die Baustofftrockenmischung mindestens ein Additiv aufweist.
57. Baustofftrockenmischung nach Aspekt 56, dadurch gekennzeichnet, dass das Additiv ausgewählt ist aus der Gruppe von Verdickern, Verzögerern, Beschleunigern, Stabilisierungsmitteln (Stabilisatoren), Rheologiestellmitteln, Zusatzmitteln zur Einstellung des Wasserrückhaltevermögens (Wasserretentionsmitteln), Dispergiermitteln, Dichtungsmitteln sowie deren Mischungen.
58. Baustofftrockenmischung nach Aspekt 57, dadurch gekennzeichnet, dass die Baustofftrockenmischung das Additiv in Mengen von 0,01 bis 10 Gew.-%, insbesondere 0,1 bis 5 Gew.-%, vorzugsweise 0,3 bis 3 Gew.-%, bevorzugt 0,5 bis 1 Gew.-%, bezogen auf die Baustofftrockenmischung, enthält.
59. Verwendung einer Baustofftrockenmischung nach einem der Aspekte 41 bis 57 zur Herstellung einer Dämmmasse, insbesondere eines Mörtels.
60. Verwendung nach Aspekt 58, dadurch gekennzeichnet, dass zur Herstellung des Mörtels die Baustofftrockenmischung mit Wasser angemacht wird, insbesondere in einem gewichtsbezogenen Verhältnis von Baustofftrockenmischung zu Wasser von 1 : 0,5 bis 1 : 2, insbesondere 1 : 0,6 bis 1 : 1,8, vorzugsweise 1 : 0,7 bis 1 : 1,6, bevorzugt 1 : 0,8 bis 1 : 1,4.
61. Dämmmasse, insbesondere Mörtel, hergestellt aus einer Baustofftrockenmischung nach einem der Aspekte 42 bis 58 durch Anmachen mit Wasser.

**Bezugszeichenliste:**

| | | | |
|---|---|---|---|
| 1 | Betonfertigteil | 5 | Hohlraum |
| 2 | Erste Betonschicht | 6 | Erste Bewehrung |
| 3 | Zweite Betonschicht | 7 | Zweite Bewehrung |
| 4 | Dämmschicht | | |

## Patentansprüche

1. Verfahren zur Herstellung eines Betonfertigteils,
**dadurch gekennzeichnet,**
**dass**
(a) in einem ersten Verfahrensschritt eine hohle Form, insbesondere eine Schalung, vorgelegt wird,
(b) nachfolgend in einem zweiten Verfahrensschritt flüssiger Beton zur Ausbildung einer ersten Betonschicht in die hohle Form gefüllt wird, insbesondere bis zu einer vorgegebenen Füllhöhe,
(c) anschließend in einem auf den zweiten Verfahrensschritt (b) folgenden dritten Verfahrensschritt eine mineralisch basierte, insbesondere zementbasierte, Dämmmasse zur Ausbildung einer Dämmschicht in die hohle Form eingefüllt wird, so dass ein Rohdämmelement mit einer Betonschicht und einer Dämmschicht gebildet wird, und
nachfolgend das Rohdämmelement ausgehärtet, insbesondere teilweise ausgehärtet, wird, so dass ein Dämmelement erhalten wird.

2. Verfahren nach Anspruch 1, **dadurch gekennzeichnet,**
**dass** das Rohdämmelement bei Temperaturen im Bereich von 20 bis 80 °C, insbesondere 30 bis 70 °C, vorzugsweise 40 bis 60 °C, ausgehärtet wird und/oder
**dass** das Rohdämmelement für einen Zeitraum von 4 bis 20 Stunden, insbesondere 5 bis 15 Stunden, vorzugsweise 8 bis 12 Stunden, ausgehärtet wird.

3. Verfahren nach Anspruch 1 oder 2, **dadurch gekennzeichnet, dass** das Rohdämmelement mit einer Bewehrung, insbesondere einer ersten Bewehrung, versehen wird.

4. Verfahren nach Anspruch 3, **dadurch gekennzeichnet, dass** die Bewehrung in der hohlen Form im ersten Verfahrensschritt (a) vorgelegt wird oder dass die Bewehrung im Anschluss an den dritten Verfahrensschritt (c) in das Rohdämmelement eingebracht wird.

5. Verfahren nach Anspruch 3 oder 4, **dadurch gekennzeichnet, dass** die Bewehrung aus einem Material mit geringer Wärmeleitfähigkeit, insbesondere mit einer Wärmeleitfähigkeit von weniger als 5 W/(mK), vorzugsweise weniger als 2 W/(mK), bevorzugt weniger als 1 W/(mK), besteht.

6. Verfahren einem der Ansprüche 3 bis 5, **dadurch gekennzeichnet, dass** sich die Bewehrung von der Betonschicht in die Dämmschicht des Rohdämmelements erstreckt, insbesondere dass sich die Bewehrung von der Betonschicht über die Dämmschicht des Rohdämmelements hinaus erstreckt.

7. Verfahren nach einem der vorangehenden Ansprüche, **dadurch gekennzeichnet, dass** das Dämmelement, aus der hohlen Form, insbesondere der Schalung, entfernt wird.

8. Verfahren nach einem der vorangehenden Ansprüche, **dadurch gekennzeichnet, dass** das eine weitere hohle Form, insbesondere Schalung, vorgelegt und mit flüssigem Beton zur Ausbildung einer zweiten Betonschicht befüllt wird, insbesondere bis zu einer vorgegebenen Füllhöhe befüllt wird, so dass ein zweite Betonschicht erhalten wird, und anschließend das Dämmelement mit der Seite Dämmschicht mit der zweiten Betonschicht, stoffschlüssig oder beabstandet, vorzugsweise beabstandet, verbunden wird, so dass ein Rohdoppelschichtelement, insbesondere ein Rohdoppelwandelement, erhalten wird.

9. Verfahren nach Anspruch 8, **dadurch gekennzeichnet, dass** das Rohdoppelschichtelement ausgehärtet, insbesondere teileweise ausgehärtet wird, vorzugsweise bei Temperaturen im Bereich von 20 bis 80 °C, insbesondere 30 bis 70 °C, vorzugsweise 40 bis 80 °C, so dass ein Doppelschichtelement, insbesondere ein Doppelwandelement, erhalten wird.

10. Verfahren nach Anspruch 9, **dadurch gekennzeichnet, dass** das Rohdoppelschichtelement für einen Zeitraum von 4 bis 20 Stunden, insbesondere 5 bis 15 Stunden, vorzugsweise 8 bis 12 Stunden, ausgehärtet wird.

11. Verfahren nach einem der Ansprüche 8 bis 10, **dadurch gekennzeichnet, dass** das Dämmelement vor dem Verbinden mit der zweiten Betonschicht mit einer zweiten Bewehrung versehen wird oder dass die weitere hohle Form mit einer zweiten Bewehrung versehen wird.

12. Verfahren nach Anspruch 11, **dadurch gekennzeichnet, dass** die zweite Bewehrung aus einem Metall, insbesondere aus einem eisenhaltigen Metall, vorzugsweise aus Stahl, besteht.

13. Verfahren nach Anspruch 11 oder 12, **dadurch gekennzeichnet, dass** sich die zweite Bewehrung in der zweiten Betonschicht erstreckt und/oder dass sich die zweite Bewehrung über die zweiten Betonschicht hinaus erstreckt, insbesondere in einen Hohlraum zwischen zweiter Betonschicht und Dämmschicht.

14. Verfahren nach einem der Ansprüche 8 bis 13, **dadurch gekennzeichnet, dass** das Doppelschichtelement aus der zweiten hohlen Form entfernt wird.

15. Verfahren nach einem vorangehenden Ansprüche zur Herstellung eines Betonfertigteils, **dadurch gekennzeichnet,**
**dass**
(a) in einem ersten Verfahrensschritt eine hohle Form, insbesondere eine Schalung, vorgelegt wird,
(b) nachfolgend in einem zweiten Verfahrensschritt flüssiger Beton zur Ausbildung einer ersten Betonschicht in die hohle Form gefüllt wird, insbesondere bis zu einer vorgegebenen Füllhöhe, und gegebenenfalls die Betonschicht verdichtet wird,
(c) anschließend in einem auf den zweiten Verfahrensschritt (b) folgenden dritten Verfahrensschritt eine mineralisch basierte, insbesondere zementbasierte, Dämmmasse zur Ausbildung einer Dämmschicht in die hohle Form eingefüllt wird, so dass ein Rohdämmelement mit einer Betonschicht und einer Dämmschicht gebildet wird, und gegebenenfalls die Dämmschicht verdichtet wird,
(d) in einem nachfolgenden vierten Verfahrensschritt das Rohdämmelement mit einer ersten Bewehrung versehen wird,
(e) nachfolgend in einem fünften Verfahrensschritt das Rohdämmelement ausgehärtet, insbesondere teilweise ausgehärtet, wird, so dass ein Dämmelement erhalten wird,
(f) gegebenenfalls in einem nachfolgenden sechsten Verfahrensschritt das Dämmelement aus der hohlen Form entfernt wird,
(g) gegebenenfalls in einem siebten Verfahrensschritt die Oberfläche der Dämmschicht, insbesondere die Oberflächen der Kanten der Dämmschicht, einer Oberflächenbehandlung unterzogen werden,
(h) nachfolgend, insbesondere in einem achten Verfahrensschritt, das Dämmelement mit einer zweiten Bewehrung versehen wird,
(i) wiederum nachfolgend, insbesondere in einem neunten Verfahrensschritt, eine zweite hohle Form, insbesondere Schalung, vorgelegt wird,
(j) nachfolgend, insbesondere in einem zehnten Verfahrensschritt, die zweite hohle Form bis zu einer vorgegebenen Füllhöhe befüllt wird, so dass eine zweite Betonschicht gebildet wird, und gegebenenfalls die zweite Betonschicht verdichtet wird,
(k) nachfolgend, insbesondere in einem elften Verfahrensschritt, das Dämmelement mit der Seite Dämmschicht mit der zweiten Betonschicht verbunden wird, insbesondere über die erste Bewehrung, so dass ein Rohdoppelschichtelement erhalten wird,
(l) nachfolgend, insbesondere in einem zwölften Verfahrensschritt, das Rohdoppelschichtelement ausgehärtet, insbesondere teilweise ausgehärtet wird, so dass ein Doppelschichtelement erhalten wird,
(m) nachfolgend, insbesondere in einem dreizehnten Verfahrensschritt, das Doppelschichtelement aus der zweiten hohlen Form entfernt wird und
(n) nachfolgend, insbesondere in einem vierzehnten Verfahrensschritt, das Doppelwandelement nachgehärtet wird.
